(19) Europäisches Patentamt
European Patent Office
Office européen des brevets

(11) **EP 2 294 450 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(21) Anmeldenummer: **09772021.3**

(22) Anmeldetag: **02.07.2009**

(51) Int Cl.:
*G01S 13/93* (2006.01)   *G01S 13/44* (2006.01)
*G01S 7/03* (2006.01)   *H01Q 1/32* (2006.01)

(86) Internationale Anmeldenummer:
**PCT/DE2009/000945**

(87) Internationale Veröffentlichungsnummer:
**WO 2010/000251 (07.01.2010 Gazette 2010/01)**

(54) **RADARSYSTEM MIT ÜBERLAPPENDEN SENDE- UND EMPFANGSANTENNEN**

RADAR SYSTEM COMPRISING OVERLAPPING TRANSMITTER AND RECEIVER ANTENNAE

SYSTÈME RADAR POURVU D'ANTENNES D'ÉMISSION ET DE RÉCEPTION CHEVAUCHANTES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.07.2008 DE 102008032070**

(43) Veröffentlichungstag der Anmeldung:
**16.03.2011 Patentblatt 2011/11**

(73) Patentinhaber: **ADC Automotive Distance Control Systems GmbH**
**88131 Lindau (DE)**

(72) Erfinder: **WINTERMANTEL, Markus**
**88131 Lindau (DE)**

(56) Entgegenhaltungen:
**EP-A1- 0 947 852       EP-A2- 0 831 553**
**EP-A2- 1 548 458       DE-A1- 19 650 544**
**US-A1- 2006 066 474**

• **DANIEL T MCGRATH: "Calculation of Coupling Coefficients for Arrays With Skewed Lattices From Infinite Array Scan Reflection Data" IEEE TRANSACTIONS ON ANTENNAS AND PROPAGATION, IEEE SERVICE CENTER, PISCATAWAY, NJ, US, Bd. 55, Nr. 7, 1. Juli 2007 (2007-07-01), Seiten 2116-2119, XP011187049 ISSN: 0018-926X**

EP 2 294 450 B1

**Beschreibung**

Die Erfindung bezieht sich auf ein Radarsystem zum Einsatz für Fahrerassistenzsysteme im Kraftfahrzeug. Das Radarsystem besitzt erfindungsgemäß überlappende Sende- und Empfangsantennen zur Reduzierung bzw. Vermeidung von Mehrdeutigkeiten bei der Winkelmessung, insbesondere in Azimutrichtung.

**Stand der Technik**

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei unterscheidet man zwischen Komfort- und Sicherheitsfunktionen.

Als Komfortfunktion spielt in der momentanen Entwicklung FSRA (Full Speed Range Adaptive Cruise Control) die wichtigste Rolle. Das Fahrzeug regelt die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst.

Neben einer Erhöhung des Komforts stehen Sicherheitsfunktionen immer stärker im Fokus, wobei die Reduzierung des Brems- bzw. Anhalteweges in Notsituationen die wichtigste Rolle spielt. Das Spektrum der entsprechenden Fahrerassistenzfunktionen reicht von einem automatischen Vorfüllen der Bremse zur Reduktion der Bremslatenz (Prefill), über einen verbesserten Bremsassistenten (BAS+) bis hin zur autonomen Notbremsung.

Für Fahrerassistenzsysteme der oben beschriebenen Art werden heute vorwiegend Radarsensoren eingesetzt. Diese arbeiten auch bei schlechten Wetterbedingungen zuverlässig und können neben dem Abstand von Objekten auch direkt deren radiale Relativgeschwindigkeit über den Dopplereffekt messen. Als Sendefrequenzen werden dabei 24 und 77GHz eingesetzt.

Die Antennen solcher Radarsysteme werden zunehmend in planarer Technologie ausgeführt, da dies Vorteile bezüglich Kosten und Baugröße hat. Zur Winkelbestimmung in Azimutrichtung werden für Senden und bzw. oder Empfangen mehrere horizontal versetzte Einzelantennen benutzt und die Phasen der zugehörigen Empfangssignale ausgewertet. Die Schrift US2006/066474 offenbart eine Radaranordnung zur winkelaufgelösten Messung von Umgebungsobjekten. Die Antennen sind nebeneinanderliegend angeordnet. Die jeweils äußeren Antennen werden alternierend als Sender betrieben. Die Offenlegungsschrift EP 0 947 852 A1 beschreibt ebenfalls ein Radarsystem zur winkelaufgelösten Messung von Umgebungsobjekten. Zur Bestimmung des horizontalen Raumwinkels sind eine Sendeantenne und mehrere Empfangsantennen benachbart in horizontaler Richtung angeordnet. Der Elevationswinkel wird durch eine Monopulsmessung bestimmt. Die Veröffentlichung "Calculation of Coupling Coefficients for Arrays with skewed Lattices from Ininite Array Scan Reflection Data" von Daniel T. McGrath veröffentlicht in IEEE Transactions on Antennas and Propagation, IEEE Service Center, Pithcataway, NJ, US, Bd. 55, Nr. 7, 1.7.2007 S.2116-2119 befasst sich mit der Berechnung von Kopplungskoeffizienten von nicht exakt rechtwinklig angeordneten Elementarstrahlern.

Für die Realisierung langreichweitiger Funktionen wie FSRA und Kollisionswarnung ist es wichtig, dass der Versatz der Einzelantennen genügend groß ist, damit der laterale Ort der Objekte genügend genau bestimmt werden kann. Bei bekannten Anordnungen der Einzelantennen sind diese maximal so breit wie ihr Abstand zueinander. Nachteilig an dieser Anordnung ist, dass Mehrdeutigkeiten in der Azimutwinkelbestimmung auftreten, welche zu Fehlinterpretationen von Situationen führen können, was insbesondere für Sicherheitsfunktionen kritisch ist..

**Aufgabe, Lösung und Vorteile der Erfindung**

Aufgabe der Erfindung ist es, ein kostengünstiges, kompaktes Radarantennensystem für ein Kraftfahrzeug mit verbesserter Winkelbestimmung zur Verfügung zu stellen.

Diese Aufgabe wird grundsätzlich mit Hilfe eines Radarsystems gemäß den Ansprüchen 1-8 gelöst., Die Verbesserung wird durch eine besondere Anordnung von Sende- und Empfangsantennen erzielt, wobei zumindest zwei Antennen aus einer Mehrzahl von Elementen bestehen. In einer vorteilhaften Ausgestaltung der Erfindung werden Patchantennen als Sende- und/oder Empfangsantenne eingesetzt, wobei eine Antenne einzelne miteinander verbundene Antennenelemente (z. B. Patches) umfasst. Dabei lässt sich wie im Folgenden detailliert beschrieben durch vertikalen Versatz oder Schrägstellung oder Verzahnung oder gemeinsames Nutzen einzelner Elemente die Breite der Einzelantennen größer als ihr Abstand zueinander gestalten.

Die Vorteile der Erfindung ergeben sich durch Reduzierung oder Vermeidung von Mehrdeutigkeiten bei der Azimutwinkelbestimmung, wodurch Fehlinterpretationen von Situationen vermieden werden, was insbesondere für Sicherheitsfunktionen wichtig ist.Das erfindungsgemäße Radarsystem umfasst Sendemittel zur Abstrahlung von Sendesignalen mit einer oder mehreren Sendeantennen, wobei zumindest eine Sendeantenne wiederum eine Mehrzahl von Elementen mit einem Phasenzentrum umfasst, und Empfangsmittel zum Empfang von an Objekten reflektierten Sendesignalen mit einer oder mehreren Empfangsantennen, wobei zumindest eine Empfangsantenne wiederum eine Mehrzahl von Elementen mit einem Phasenzentrum umfasst.

Weiterhin sind Signalverarbeitungsmitteln zur Prozessierung (Verarbeitung) der empfangenen Signale vorgesehen. Zumindest eine Sende- und eine Empfangsantenne sind in planarer Technologie realisiert und auf einer ebenen Fläche angeordnet. Sendeantennen haben jeweils zumindest näherungsweise dieselbe Strahlcharakteristik, gleiches gilt für die Empfangsantennen. Die Strahlcharakteristik der Sendeantennen kann aber unterschiedlich zur Strahlcharakteristik dieser Empfangsantennen sein.

Es werden Empfangssignale aus unterschiedlichen Kombinationen dieser Sende- und Empfangsantennen akquiriert. In jeder Kombination ist jeweils eine Sende- und eine Empfangsantenne aktiv. Die Empfangssignale ergeben sich also aus reflektierten Signalen, welche jeweils von einer Sendeantenne stammen und einer Empfangsantenne empfangen werden. Jeder Kombination kann ein relatives Phasenzentrum zugeordnet werden, das als die Summe der beiden Vektoren von einem Referenzpunkt zu den Phasenzentren der Sende- und Empfangsantenne definiert ist.

In den Signalverarbeitungsmitteln wird aus diesen Empfangssignalen für Objekte deren Winkellage in einer Raumrichtung R (z. B. horizontal) abgeleitet. Diese Empfangssignale eines einzelnen Objekts haben unterschiedliche Phasenlagen zueinander abhängig von der Winkellage dieses Objektes in der Raumrichtung R. Das erfindungsgemäße Radarsystem wird dadurch gekennzeichnet, dass zumindest zwei der Sende- und Empfangsantennen bezüglich der Raumrichtung R überlappen ohne identisch zu sein. Es handelt sich also nicht um eine gemeinsame Antenne für Senden und Empfangen. Dieser Überlapp wird durch wenigstens eine der nachfolgenden Anordnungen bzw. Ausgestaltungen dieser Sende- und Empfangsantennen realisiert:

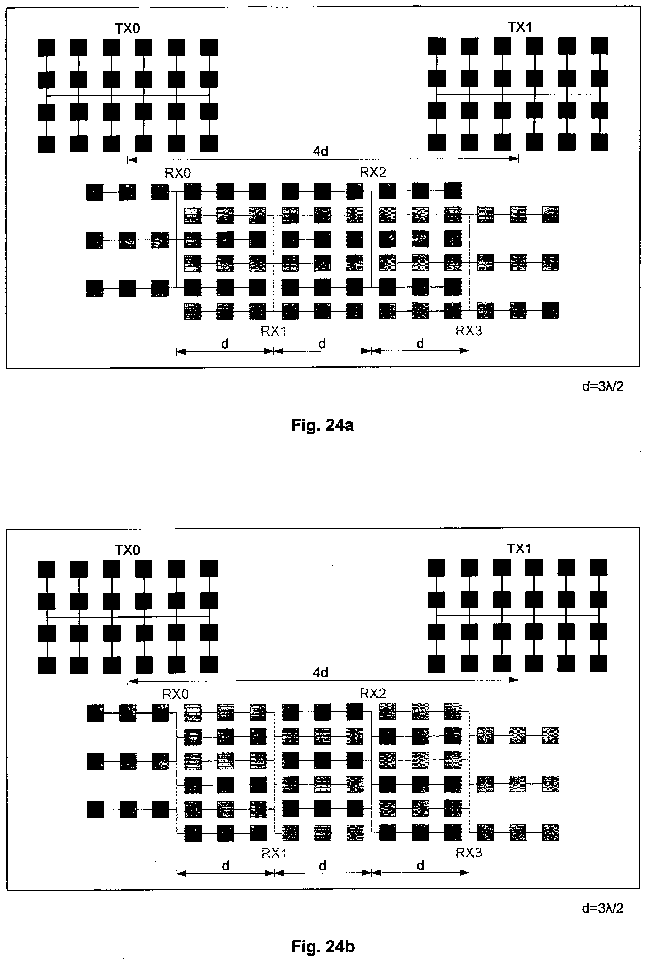

- Antennen sind bezüglich der zur Raumrichtung R senkrechten Raumrichtung S zueinander versetzt, z. B. sind für eine horizontale Raumrichtung R die Sendeantennen über den Empfangsantennen angeordnet oder umgekehrt.
- Die Sende- und bzw. oder die Empfangsantennen haben bezüglich der Raumrichtung R eine schräge Form, z. B. sind die Spalten und bzw. oder die Zeilen der jeweiligen planaren Antennen nicht parallel oder senkrecht, sondern schräg, d.h. in einem Winkel $\alpha$ mit $0° < |\alpha| < 90°$, zur Raumrichtung R angeordnet.
- Antennen sind bezüglich der Raumrichtung R ineinander verzahnt, wie es in einer besonderen Ausführungsform in Fig. 24 dargestellt ist.
- Strahlende bzw. empfangende Elemente (z. B. Patches) werden von wenigstens zwei Sende- bzw. Empfangsantennen gemeinsam benutzt.

In einer vorteilhaften Ausgestaltung der Erfindung entsteht der Überlapp von zumindest zwei der Sende- und Empfangsantennen bezüglich der Raumrichtung R dadurch, dass zur Vermeidung oder Reduzierung von Mehrdeutigkeitseffekten bei der Winkelschätzung bezüglich der Raumrichtung R entsprechend breite Antennen für eine entsprechend schmale Strahlcharakteristik benötigt werden.

Eine besondere Ausgestaltung der Erfindung sieht ein Radarsystem mit Sende- und Empfangsantennen, die eine bezüglich der Raumrichtung R schräge Form haben, vor, wobei die Sendeantennen entgegen den Empfangsantennen gekippt angeordnet sind.

Eine positive Ausgestaltung des Radarsystems sieht mehrere Sendeantennen (Anzahl $N_S$, vorzugsweise =2) und mehrere Empfangsantennen (Anzahl $N_E$) vor, wobei die Empfangsantennen $N_E$ bezüglich der Raumrichtung R nicht außerhalb der äußeren dieser $N_S$ Sendeantennen liegen, und jeweils zumindest näherungsweise dieselbe Strahlcharakteristik besitzen und bezüglich ihren Phasenzentren in dieser Raumrichtung R jeweils zumindest näherungsweise äquidistant angeordnet sind.

Die Sendeantennen sind so angeordnet, dass in der Raumrichtung R der Abstand dieser $N_S$ Sendeantennen zueinander um den Faktor $N_E$ oder $N_E-1$ größer ist als der Abstand dieser $N_E$ Empfangsantennen zueinander, wodurch eine Anordnung mit einer Sendeantenne und maximal $N_S \cdot N_E$ in dieser Raumrichtung R äquidistant angeordneten Empfangsantennen mit zumindest näherungsweise identischer Abstrahlcharakteristik synthetisiert wird.

Vorzugsweise ist bezüglich der Raumrichtung R die Breite der $N_S$ Sendeantennen und bzw. oder die Breite der $N_E$ Empfangsantennen größer ist als der Abstand der $N_E$ Empfangsantennen zueinander, insbesondere etwa um den Faktor 2. Dies bewirkt eine schmale Strahlcharakteristik dieser Antennen, so dass der Effekt von Mehrdeutigkeiten in der Winkelbildung bezüglich der Raumrichtung R reduziert oder weitestgehend vermieden wird.

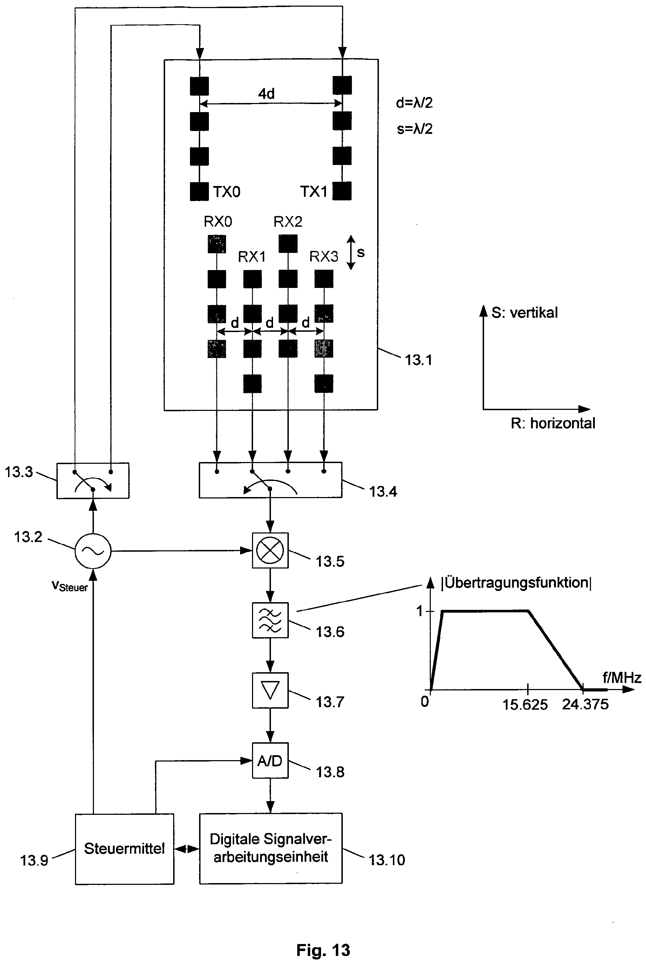

In einer vorteilhaften Ausgestaltung des Radarsystems werden Empfangssignale aus unterschiedlichen Kombinationen der $N_S$ Sende- und der $N_E$ Empfangsantennen akquiriert. Dabei liegen die relativen Phasenzentren dieser Kombinationen von Sende- und Empfangsantennen bezüglich der Raumrichtung R zumindest näherungsweise äquidistant. Das relative Phasenzentrum einer Kombination einer Sende- und einer Empfangsantenne ist hier definiert als Summe der beiden Vektoren von einem Referenzpunkt zu den Phasenzentren der Sende- und der Empfangsantenne. Bezüglich der zur Raumrichtung R senkrechten Raumrichtung S variiert die Position der relativen Phasenzentren dieser Kombinationen aus Sende- und Empfangsantennen periodisch mit der Periodenlänge P, wenn eine Reihenfolge dieser Kombinationen aus Sende- und Empfangsantennen betrachtet wird, welche in der Raumrichtung R bezüglich der Position der relativen Phasenzentren geordnet ist. Eine beispielhafte Ausgestaltung einer solchen Antennenanordnung ist in Fig. 13 mit dem Bezugzeichen 13.1 dargestellt. In den Signalverarbeitungsmitteln ausgenutzt wird, dass die Empfangssignale eines Objekts abhängig von dessen Winkellage in der Raumrichtung S einen über die so geordneten Kombinationen von Sende- und Empfangsantennen periodisch mit der Periodenlänge P alternierenden Phasenanteil haben, wodurch für diese Raumrichtung S Aussagen zur Winkellage von Objekten und bzw. oder zur Fehlausrichtung des Radarsystems möglich sind.

In einer weiteren Ausgestaltung des erfindungsgemäßen Radarsystems, bei welchem die Raumrichtung R horizontal und die Raumrichtung S vertikal liegt wird in den Signalverarbeitungsmitteln zur Erkennung von unter- und bzw. oder überfahrbaren insbesondere stationären Objekten ein Maß verwendet. Dieses Maß nutzt wenigstens eine Abweichung gegenüber den sich bei Empfangssignalen aus nur einem Elevationswinkel ergebenden Verhältnissen aus. wobei in Zusammenhang mit der spiegelnden Eigenschaft von Straßenoberflächen die Größe und bzw. oder der Betrag, insbesondere jeweils gefiltert über die Objektentfernung, und bzw. oder die entfernungsbezogene Variation dieses Maßes für eine zumindest grobe Schätzung der Höhe von Objekten über der Straßenoberfläche benutzt wird.

Eine weitere positive Ausgestaltung der Erfindung sieht ein Radarsystem vor, bei welchem Empfangssignale aus unterschiedlichen Kombinationen von Sende- und Empfangsantennen akquiriert werden und die dabei benutzten Sende- und Empfangsantennen jeweils zumindest näherungsweise dieselbe Strahlcharakteristik haben, wobei die Strahlcharakteristik dieser Sendeantennen unterschiedlich zur Strahlcharakteristik dieser Empfangsantennen sein kann.

Bezüglich der Raumrichtung R variiert die Position der relativen Phasenzentren dieser Kombinationen aus Sende- und Empfangsantennen periodisch mit der Periodenlänge Q um ein äquidistantes Raster. Das relative Phasenzentrum einer Kombination einer Sende- und einer Empfangsantenne ist hier definiert als Summe der beiden Vektoren von einem Referenzpunkt zu den Phasenzentren der Sende- und der Empfangsantenne.

In den Signalverarbeitungsmitteln zur Bestimmung der Lage von Objekten in der Raumrichtung R wird ausgenutzt, dass die Empfangssignale eines Objekts abhängig von dessen Winkellage in der Raumrichtung R neben einem linearen Phasenanteil einen mit der Periodenlänge Q alternierenden Phasenanteil haben, wenn eine in der Raumrichtung R bezüglich der Position der relativen Phasenzentren geordnete Reihenfolge der Kombinationen aus Sende- und Empfangsantennen betrachtet wird. Der linearen Phasenanteil der Empfangssignale ermöglicht eine feine, aber mehrdeutige Winkelbestimmung in der Raumrichtung R, der alternierende Phasenanteil eine grobe, aber eindeutige Winkelbestimmung. Mit beiden Phasenanteilen kann der Winkel also eindeutig und hochauflösend bestimmt werden.

## Kurzbeschreibung der Zeichnungen

In Fig. 1 ist die erste Ausführungsform eines Radarsystems dargestellt.

Fig. 2 zeigt für die erste Ausführungsform die Frequenz der Sende- und der Empfangssignale, welche aus sogenannten Frequenzrampen besteht, sowie die dabei sequentiell angesteuerten Antennenkombinationen.

Fig. 3 zeigt ein abgetastetes Signal bei Anwesenheit von zwei Objekten vor der ersten DFT (links) und nach der ersten DFT (rechts).

In Fig. 4 ist der über die Frequenzrampen rotierende komplexe Spektralwert im Entfernungstor 4, in welchem sich genau ein Objekt befindet, dargestellt.

Fig. 5 zeigt das zweidimensionale komplexwertige Spektrum nach der zweiten DFT.

Fig. 6 zeigt für die Antennenanordnung der ersten Ausführungsform die unterschiedlichen Weglängen zwischen den Einzelantennen und einem weit entfernten relativ zum Sensor ruhenden Objekt bei einem Azimutwinkel $\alpha_{Az} < 0$.

Fig. 7a zeigt eine Antennenanordnung mit einer Sende- und 8 Empfangsantennen, welche zur Antennenanordnung der ersten Ausführungsform mit 2 Sende- und 4 Empfangsantennen äquivalent ist; in Fig. 7b sind für diese äquivalente Anordnung die unterschiedlichen Weglängen zwischen den Einzelantennen und einem weit entfernten relativ zum Sensor ruhenden Objekt dargestellt.

Fig. 8a zeigt für die obigen Antennenanordnungen den über die Antennenkombinationen rotierenden komplexen Spektralwert im Entfernung-Relativgeschwindigkeit-Tor (9,0), in welchem sich genau ein Objekt (relativ zum Sensor ruhend) befindet; in Fig. 8b ist betragsmäßig das zugehörige Spektrum nach der dritten DFT dargestellt.

Fig. 9 zeigt die Daten vor der dreidimensionalen DFT (links) und das dreidimensionale komplexwertige Spektrum danach (rechts).

In Fig. 10 ist die zweite Ausführungsform eines Radarsystems dargestellt.

Fig. 11 zeigt für die zweite Ausführungsform die Frequenz der Sende- und der Empfangssignale bei paralleler Ansteuerung aller Antennenkombinationen.

Fig. 12 zeigt die dritte Ausführungsform eines Radarsystems.

Fig. 13 zeigt die vierte Ausführungsform eines Radarsystems.

Fig. 14 zeigt für die Antennenanordnung der vierten Ausführungsform die unterschiedlichen Weglängen zwischen den Einzelantennen und einem weit entfernten relativ zum Sensor ruhenden Objekt bei einem Elevationswinkel $\alpha_{El}$ > 0 und dem Azimutwinkel $\alpha_{Az}$ = 0.

Fig. 15a zeigt für die zu Fig. 14 angegebenen Verhältnisse den über die Antennenkombinationen rotierenden komplexen Spektralwert im Entfernung-Relativgeschwindigkeit-Tor (9,0), in welchem sich genau ein Objekt (relativ zum Sensor ruhend) befindet; in Fig. 15b ist betragsmäßig das zugehörige Spektrum nach der dritten DFT mit zwei um die Hälfte der DFT-Länge N = 16 beabstandeten Leistungsspitzen bei n = 2 und n = 10 dargestellt.

Fig. 16 zeigt in der komplexen Ebene die Zusammenhänge zur Umformung einer Beziehung für die Elevationsmessfähigkeit der vierten Ausführungsform.

Fig. 17 illustriert sie spiegelnde Wirkung der Straßenoberfläche.

Fig. 18a zeigt den relativen Imaginärteil vom Verhältnis V und Fig. 18b seinen absoluten Imaginärteil jeweils über der Entfernung r für ein Fahrzeug (mittlere Höhe $h_O$ = 0.5m, vertikale Ausdehnung 0.3m) und eine Brücke (mittlere Höhe $h_O$ = 5m, vertikale Ausdehnung 0.3m), wobei die Sensorhöhe $h_S$ = 0.5m ist.

In Fig. 19 ist der sich für d = 3$\lambda$/2 ergebende Zusammenhang $\Delta\varphi$ = 3$\pi$sin($\alpha_{Az}$) zwischen Phasendifferenz $\Delta\varphi$ und Azimutwinkel $\alpha_{Az}$ dargestellt.

Fig. 20a zeigt ein ideales Antennendiagramm mit azimutalem Erfassungsbereich -19.5...+19.5; Fig. 20b zeigt ein realisierbares Antennendiagramm für einen solchen Erfassungsbereich mit wenigstens 15dB Unterdrückung außerhalb.

Fig. 21 zeigt die Antennenanordnung einer fünften Ausführungsform eines Radarsystems.

Fig. 22 zeigt die Antennenanordnung einer sechsten Ausführungsform eines Radarsystems.

Fig. 23 zeigt die Antennenanordnung einer siebten Ausführungsform eines Radarsystems.

Fig. 24a und 24b zeigen zwei alternative Antennenanordnungen einer achten Ausführungsform eines Radarsystems.

Fig. 25 zeigt die Antennenanordnung einer neunten Ausführungsform eines Radarsystems.

Fig. 26 zeigt die Antennenanordnung einer zehnten Ausführungsform eines Radarsystems.

Fig. 27 zeigt die elfte Ausführungsform eines Radarsystems.

Fig. 28 zeigt ein Antennendiagramm, welches durch entsprechende Schultern auch außerhalb des azimutalen Bereichs -19.5...+19.5 sensitiv ist.

Fig. 29 zeigt für die elfte Ausführungsform einen Verlauf des Betrags des Spektrums nach der dritten DFT mit zwei um die Hälfte der DFT-Länge N = 16 beabstandeten Leistungsspitzen bei n = 2 und n = 10.

**Ausführungsbeispiele**

Die Erfindung wird nun anhand beispielhafter Ausführungen von Radarsystemen und Anordnungen ihrer Antennen erläutert. Vorab sei bemerkt, dass bei Bildern, Diagrammen und Herleitungen von punktförmigen Objekten ausgegangen wird, sofern nicht explizit von ausgedehnten Objekten die Rede ist.

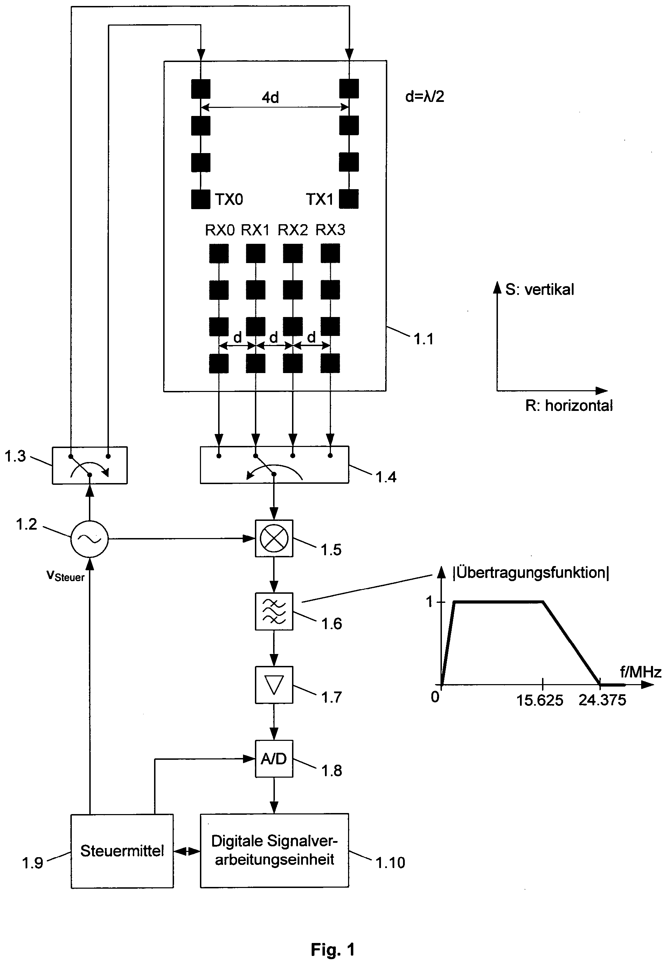

**Ausführung 1 nach Fig. 1**

Zuerst wird die beispielhafte Ausführung eines Radarsystems, welches in Fig. 1 grob dargestellt ist, betrachtet. Das Radarsystem besitzt 2 Sendeantenne TX0 und TX1 zur Abstrahlung von Sendesignalen und 4 Empfangsantennen RX0-RX3 zum Empfang von an Objekten reflektierten Sendesignalen; die Antennen sind auf einer ebenen Platine 1.1 in planarer Technologie als Patchantennen ausgeführt, wobei diese Platine bezüglich horizontaler und vertikaler Richtung wie im Bild dargestellt orientiert ist. Alle Antennen (Sende- und Empfangsantennen) haben in Elevation und Azimut dieselbe Strahlcharakteristik. Die 4 Empfangsantennen (und damit ihre Phasen-, also Abstrahlzentren) haben jeweils gleichen lateralen, d. h. horizontalen Abstand $d = \lambda/2 = 6.2$mm zueinander, wobei $\lambda = c/24.15$GHz = 12.4mm die mittlere Wellenlänge der abgestrahlten Signale ist; der horizontale Abstand der beiden Sendeantennen zueinander ist 4-mal so groß, beträgt also $4d = 2\lambda$.

Über die Multiplexer 1.3 und 1.4 kann jeweils ein der beiden Sendeantennen und eine der 4 Empfangsantennen selektiert werden.

Die auf der jeweils selektierten Sendeantenne abgestrahlten Sendesignale werden aus dem Hochfrequenz-Oszillator 1.2 im 24GHz-Bereich gewonnen, welcher über eine Steuerspannung $v_{Steuer}$ in seiner Frequenz verändert werden kann; die Steuerspannung wird in den Steuermitteln 1.9 erzeugt. Die von der jeweils selektierten Empfangsantenne empfangenen Signale werden in dem reellwertigen Mischer 1.5 ebenfalls mit dem Signal des Oszillators 1.2 in den Niederfrequenzbereich heruntergemischt. Danach durchlaufen die Empfangssignale ein Bandpassfilter 1.6 mit der dargestellten Übertragungsfunktion, einen Verstärker 1.7 und einen A/D-Wandler 1.8; anschließend werden sie in einer digitalen Signalverarbeitungseinheit 1.10 weiterverarbeitet.

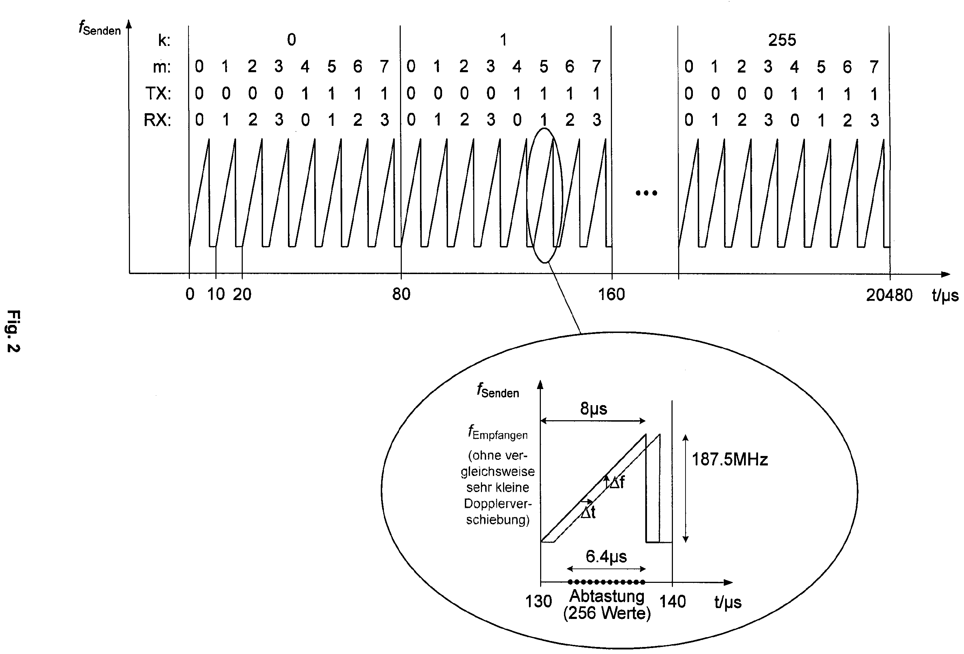

Damit die Entfernung von Objekten gemessen werden kann, wird - wie in Fig. 2 dargestellt - die Frequenz des Hochfrequenz-Oszillators und damit der Sendesignale sehr schnell linear verändert (in 8µs um 187.5MHz); man spricht dabei von einer Frequenzrampe. Die Frequenzrampen werden periodisch wiederholt (alle 10µs); insgesamt gibt es 2048 Frequenzrampen. Über die Frequenzrampen werden die 8 Kombinationen aus den 2 Sende- und 4 Empfangsantennen in der Reihenfolge TX0/RX0, TXO/RX1, TX0/RX2, TX0/RX3, TX1/RX0, TX1/RX1, TX1/RX2 und TX1/RX3 periodisch wiederholt, wobei vor jeder Frequenzrampe die jeweils nächste Kombination selektiert wird. In Fig. 2 ist k die Laufvariable über die 2048/8 = 256 Frequenzrampen für jede Antennenkombination und $m = 4 \cdot m_{TX} + m_{RX}$ die Laufvariable über die 8 Antennenkombinationen $TXm_{TX}/RXm_{RX}$.

Das Empfangssignal eines einzelnen Objekts ist nach Mischung und damit auch am A/D-Wandler für jede Frequenzrampe und jede der 8 Antennenkombinationen eine sinusförmige Schwingung; dies kann man sich mit Hilfe von Fig. 2 wie folgt erklären: Hat das Objekt die radiale Relativgeschwindigkeit Null zum Radarsystem, so ist die Frequenzdifferenz $\Delta f$ zwischen gesendetem Signal und empfangenem Signal konstant und dabei proportional zur Signallaufzeit $\Delta t$ und damit proportional zur radialen Entfernung $r = c \cdot \Delta t/2$, wobei c die Lichtgeschwindigkeit ist und der Faktor 1/2 berücksichtigt, dass sich die Laufzeit $\Delta t$ auf das Hin- und Zurücklaufen der Welle bezieht; die Frequenzdifferenz $\Delta f$ ergibt sich bei obiger Auslegung zu $\Delta f = 2r/c \cdot 187.5$MHz/8µs = r·156.250kHz/m. Da das empfangene Signal mit der Oszillator- und damit Sendefrequenz reellwertig gemischt wird, ergibt sich nach dem Mischer eine sinusförmige Schwingung mit der Frequenz $\Delta f$. Diese Frequenz liegt im MHz-Bereich und wird bei einer nichtverschwindenden radialen Relativgeschwindigkeit noch um die Dopplerfrequenz verschoben, welche aber nur im kHz-Bereich liegt und deshalb gegenüber dem Frequenzanteil durch die Objektentfernung näherungsweise vernachlässigbar ist. Gibt es mehrere Objekte, so ist das Empfangssignal eine Überlagerung mehrerer sinusförmiger Schwingungen unterschiedlicher Frequenz.

Während jeder Frequenzrampe wird das Empfangssignal am A/D-Wandler 256 mal jeweils im Abstand von 25ns (also mit 40 MHz) abgetastet (siehe Fig. 2). Wie aus Fig. 2 ersichtlich ist, macht eine Signalabtastung nur in dem Zeitbereich Sinn, wo Empfangssignale von Objekten im empfangbaren Entfernungsbereich eintreffen - nach Rampenstart muss also wenigstens die zur maximal empfangbaren Entfernung korrespondierende Laufzeit abgewartet werden (bei einer maximal empfangbaren Entfernung von 150m entspricht dies 1µs).

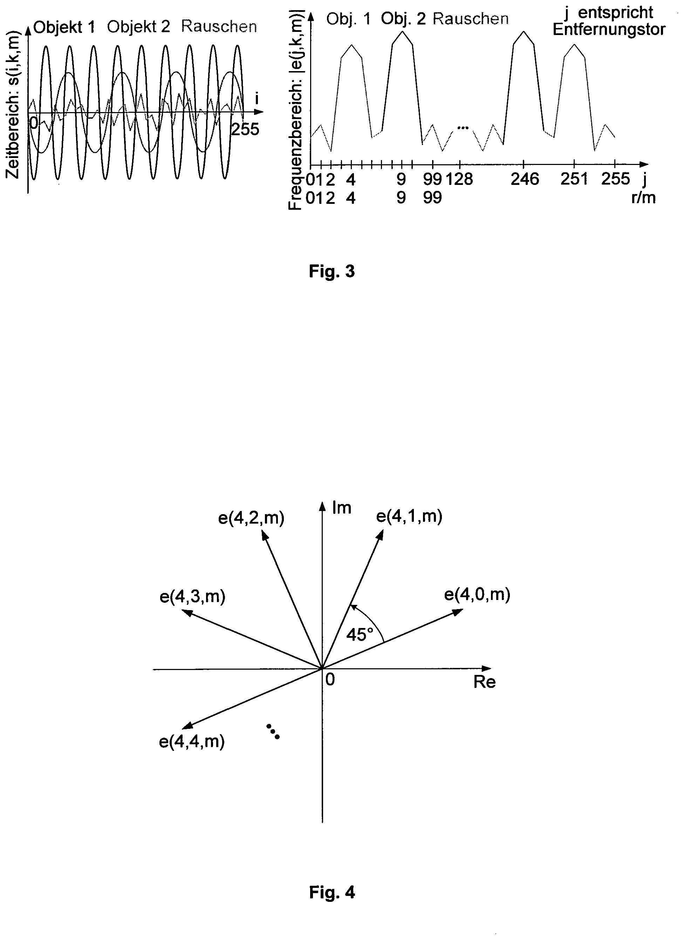

Dann wird über die 256 Abtastwerte jeder Frequenzrampe eine diskrete Fouriertransformation (DFT) in Form einer schnellen Fouriertransformation (FFT = Fast Fourier Transform) gebildet. Dadurch kann man Objekte in unterschiedlichen Entfernungen, welche zu unterschiedlichen Frequenzen führen, trennen (siehe Fig. 3; links Signal vor DFT bei Anwesenheit von zwei Objekten, rechts nach DFT). Jede der diskreten Frequenzstützstellen j der DFT korrespondiert zu einer Entfernung r und kann deshalb analog zu Pulsradaren auch als Entfernungstor bezeichnet werden; bei obiger Auslegung haben die Entfernungstore gerade einen Abstand und damit eine Breite von einem Meter (ergibt sich aus r·156.250kHz/m = 1/(6.4μs)). In den Entfernungstoren, in welchen sich Objekte befinden, treten in der DFT Leistungsspitzen auf. Da die abgetasteten Empfangssignale reellwertig sind und der obere Übergangsbereich des analogen Bandpassfilters 1.5 in Fig. 1 eine Frequenzbandbreite von 8.75MHz hat (entspricht dem Bereich von 56 Frequenzstützstellen), können nur 100 der 256 diskreten Frequenzstützstellen weiterverarbeitet werden (es sei bemerkt, dass beliebig schmale Übergangsbereiche von Filtern nicht realisierbar sind). Das Filter 1.5 dämpft kleine Frequenzen und somit die Empfangssignale von nahen Objekten, um eine Übersteuerung des Verstärkers 1.6 und des A/D-Wandlers 1.7 zu vermeiden (die an den Antennen empfangenen Signale werden mit abnehmendem Objektabstand ja stärker).

Über die 256 Frequenzrampen (k = 0,1,...,255) fallen in jeder der 8 Antennenkombinationen m (m=0,1,...,7) für jedes Entfernungstor j (also jede der 100 betrachteten Frequenzstützstellen) komplexe Spektralwerte e(j,k,m) an. Gibt es in der zu einem Entfernungstor korrespondierenden Entfernung genau ein Objekt, so rotiert der komplexe Spektralwert in diesem Entfernungstor j über die 256 Frequenzrampen jeder Antennenkombination mit der Dopplerfrequenz, da sich von Frequenzrampe zu Frequenzrampe die Entfernung (im mm-Bereich oder darunter) und damit die Phasenlage der zugehörigen Schwingung gleichförmig ändert (siehe Fig. 4; die dort dargestellte Phasenänderung von 45° pro Frequenzrampe korrespondiert zu einer Entfernungsabnahme des Objekts von $\lambda/(8\cdot2)$ = 0.78mm, wobei die mittlere Wellenlänge $\lambda$ = c/24.15GHz = 12.4mm ist und der Faktor 2 im Nenner das Hin- und Zurücklaufen der Wellen berücksichtigt, woraus sich die radiale Relativgeschwindigkeit $v_{rel}$ = 0.78mm/80μs = 35km/h ergibt; positives Vorzeichen der radialen Relativgeschwindigkeit ist als Annäherung definiert). Mehrere Objekte mit unterschiedlicher radialer Relativgeschwindigkeit im selben Entfernungstor werden dadurch getrennt, dass für jede Antennenkombination und jedes Entfernungstor über die in den 256 Frequenzrampen anfallenden komplexen Spektralwerte eine zweite DFT gerechnet wird. Jede diskrete Frequenzstützstelle I dieser zweiten DFT korrespondiert zu einem Satz von Dopplerfrequenzen (wegen der Abtastung der Dopplerfrequenz kann sie nur bis auf ein unbekanntes ganzzahliges Vielfaches ihrer Abstastfrequenz bestimmt werden) und somit einem Satz von radialen Relativgeschwindigkeiten $v_{rel}$ von Objekten, so dass die diskreten Frequenzstützstellen der zweiten DFT als Relativgeschwindigkeitstore bezeichnet werden können; für die radiale Relativgeschwindigkeit wird ab hier zur sprachlichen Vereinfachung der Zusatz "radial" weggelassen. Die zweite DFT dient nicht nur zur Ermittlung der Relativgeschwindigkeit, sondern sie erhöht durch ihre Integration auch die Detektionsempfindlichkeit - bei 256 Frequenzrampen etwa um $10\cdot\log_{10}(256)$ = 24dB.

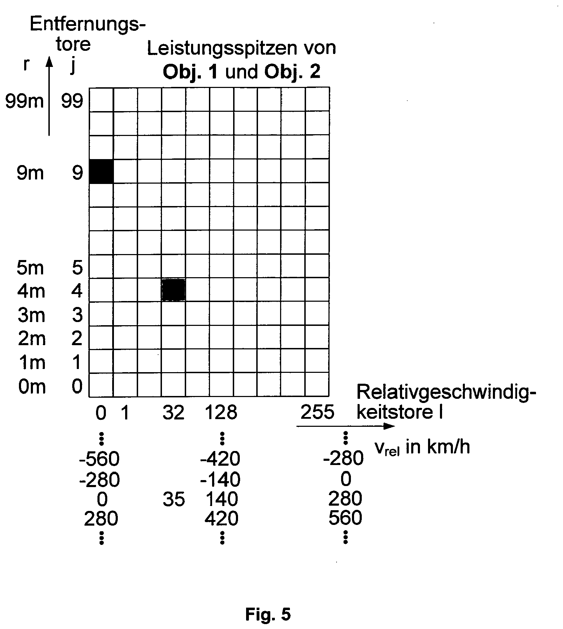

Nach dieser zweiten DFT für die Relativgeschwindigkeiten ergibt sich für jede Antennenkombination ein zweidimensionales komplexwertiges Spektrum, wobei die einzelnen Zellen als Entfernung-Relativgeschwindigkeit-Tore bezeichnet werden können und durch Objekte Leistungsspitzen am jeweils zugehörigen Entfernung-Relativgeschwindigkeit-Tor auftreten (siehe Fig. 5).

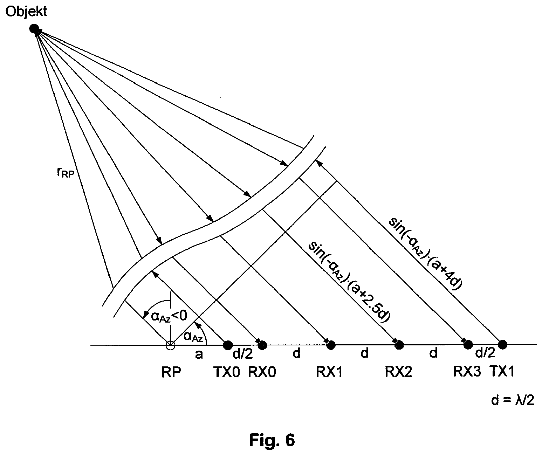

Schließlich wird dann noch die Information aus den 8 Antennenkombinationen fusioniert. Die von den beiden Sendeantennen stammenden, an einem einzelnen Objekt reflektierten Wellen kommen an den 4 Empfangsantennen abhängig vom Azimutwinkel $\alpha_{Az}$ mit unterschiedlichen Phasenlagen zueinander an, da die Entfernungen zwischen Objekt und Sende- sowie Empfangsantennen leicht unterschiedlich sind. Dies wird nun näher erläutert, wobei das betrachtete Objekt zuerst relativ zum Sensor ruhen soll, d. h., es hat die Relativgeschwindigkeit Null. In Fig. 6 sind in vertikaler Projektion die Phasenzentren der Antennen sowie die Strahlengänge zu einem weit entfernten relativ zum Sensor ruhenden Objekt bei Azimutwinkel $\alpha_{Az}$ < 0 (positives $\alpha_{Az}$ bedeute rechts der Lotfläche zur Platinenebene) und Elevationswinkel $\alpha_{El}$ = 0 (in der horizontalen Lotfläche zur Platinenebene) dargestellt; das Objekt ist so weit entfernt, dass die Strahlengänge als parallel angenommen werden können, d. h., das Objekt befindet sich im Fernfeld der Antennenanordnung. Die Weglänge r(m) für die Antennenkombination m = $4\cdot m_{TX}+m_{RX}$ von der Sendeantenne $TXm_{TX}$ zum Objekt und zurück zur Empfangsantenne $RXm_{RX}$ ergibt sich zu

$$r(m) = 2\cdot r_{RP} + \sin(-\alpha_{Az})\cdot(a+m_{TX}\cdot4d+a+d/2+m_{RX}\cdot d) = 2\cdot r_{RP} + \sin(-\alpha_{Az})\cdot(2a+d/2+m\cdot d) ,$$

wobei $r_{RP}$ die Weglänge von einem Referenzpunkt RP auf der Antennenplatine zum Objekt und a der horizontale Abstand zwischen Referenzpunkt und Sendeantenne TX0 ist. Aus dieser Beziehung sieht man, dass sich der Abstand linear mit der Nummer m der Antennenkombination verändert. Die Größe (2a+d/2+m·d) stellt den horizontalen Abstand des sogenannten relativen Phasenzentrums der Antennenkombination m zum Referenzpunkt RP dar und ist die Summe aus horizontalem Abstand der zugehörigen Sende- und Empfangsantenne zum Referenzpunkt (das relative Phasenzentrum einer Kombination einer Sende- und einer Empfangsantenne ist hier definiert als Summe der beiden Vektoren von einem Referenzpunkt zu den Phasenzentren der Sende- und der Empfangsantenne).

Der Phasenunterschied $\varphi(m)-\varphi(0)$ zwischen den Empfangswellen für die Antennenkombination m=0,1,...,7 und die Antennenkombination m=0 ergibt sich auf Grund der unterschiedlichen Weglängen r(m) zu

$$\varphi(m)-\varphi(0) \ = \ -2\pi/\lambda\cdot[r(m) - r(0)]$$

$$= \ -2\pi/\lambda\cdot[2\cdot r_{RP} + \sin(-\alpha_{Az})\cdot(2a+d/2+m\cdot d) - 2\cdot r_{RP} - \sin(-\alpha_{Az})\cdot(2a+d/2+0\cdot d)]$$

$$= \ -2\pi/\lambda\cdot\sin(-\alpha_{Az})\cdot d\cdot m \ = \ 2\pi/\lambda\cdot\sin(\alpha_{Az})\cdot d\cdot m$$

und verändert sich somit ebenfalls linear mit der Nummer m der Antennenkombination. Die Amplitude der auf den unterschiedlichen Antennenkombinationen empfangenen Signalen ist konstant, da alle Antennen gleiche Strahlcharakteristik haben und der Abstand der Antennen zum weit entfernten Objekt für eine Pegelbetrachtung nur vernachlässigbar gering differiert.

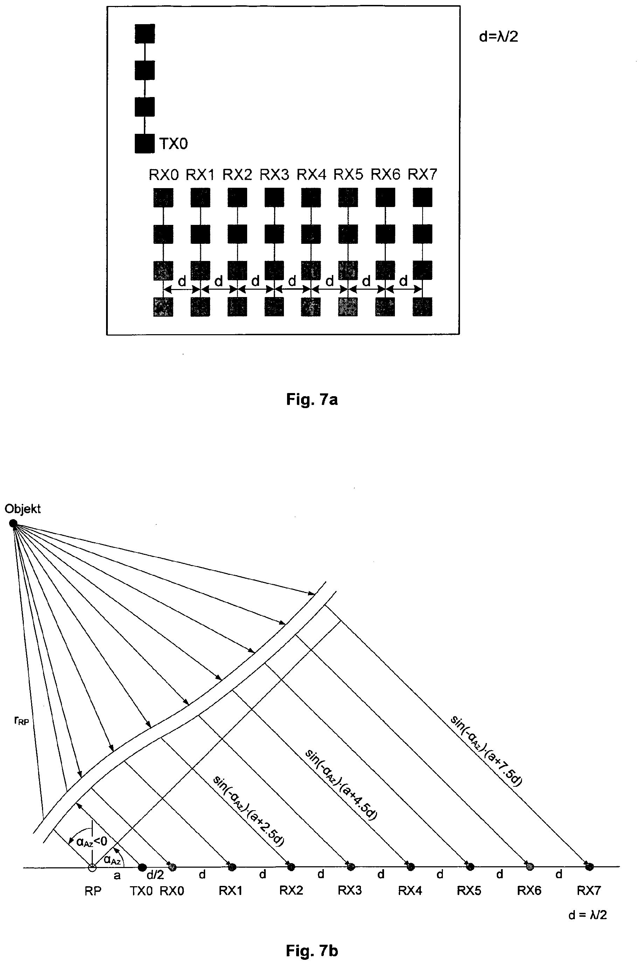

Wie unmittelbar einsichtlich ist, ergeben sich für die in Fig. 7a dargestellte Antennenanordnung mit vertikaler Projektion nach Fig. 7b genau dieselben Beziehungen für die Weglänge r(m) und den Phasenunterschied $\varphi(m)-\varphi(0)$ wie für die bisher betrachtete Anordnung nach Fig. 1; die Anordnung nach Fig. 7a hat nur eine Sendeantenne TX0 und 8 äquidistante Empfangsantennen RX0-RX7, wobei die Antennenkombination m = $m_{RX}$ nun aus der Sendeantenne und der Empfangsantenne RXm$_{RX}$ gebildet wird. Wegen identischer Einzelantennen und identischen Phasenbeziehungen der Antennenkombinationen zueinander sind beide Antennenanordnungen bezüglich der Winkelmessfähigkeit äquivalent. Die hier vorgestellte Anordnung nach Fig. 1 hat aber den Vorteil, dass sie fast nur die halbe horizontale Ausdehnung im Vergleich zur konventionellen Anordnung nach Fig. 7a hat, wodurch sich die Sensorgröße signifikant reduzieren lässt.

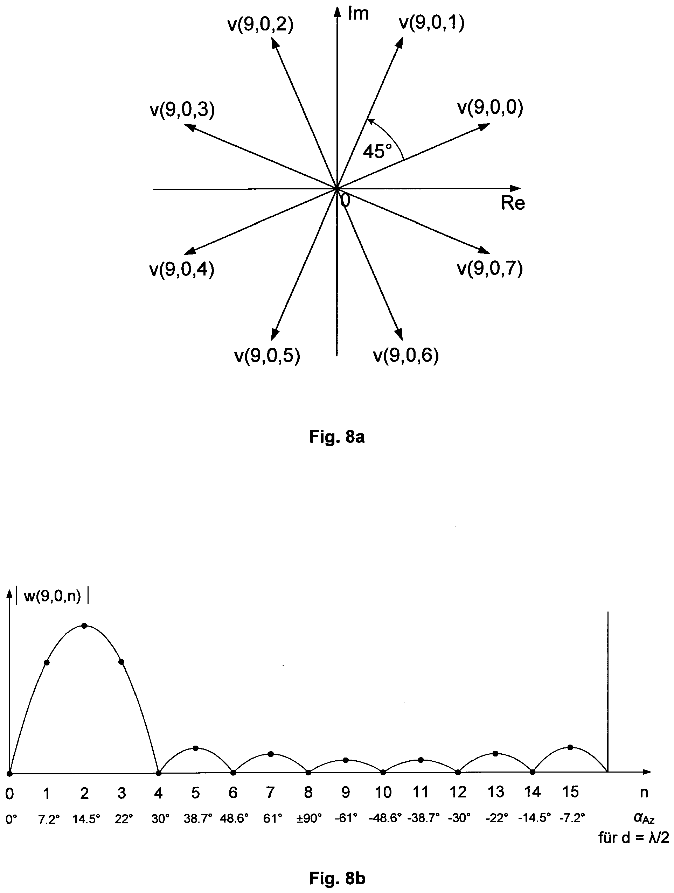

Die über die 8 Antennenkombinationen m linear zu bzw. abnehmenden azimutwinkelabhängigen Phasenunterschiede $\varphi(m)-\varphi(0)$ bleiben abgesehen von eventuellen konstanten und damit kompensierbaren Phasenverschiebungen bis nach der zweiten DFT erhalten; gibt es also in einem Entfernung-Relativgeschwindigkeit-Tor (j,l) nur ein Objekt, so rotiert der dortige komplexe Spektralwert v(j,l,m) über die 8 Antennenkombinationen m = 0,1,...,7 mit konstanter, vom Azimutwinkel abhängiger Drehgeschwindigkeit (siehe als Beispiel Fig. 8a). Deshalb kann man in jedem Entfernung-Relativgeschwindigkeit-Tor eine digitale Strahlformung für die Azimutrichtung durchführen. Dazu bildet man Summen über die komplexen Werte zu den 8 Antennekombinationen, welche jeweils mit einem Satz komplexer Faktoren mit linear sich ändernder Phase multipliziert werden; abhängig von der linearen Phasenänderung des jeweiligen Faktorensatzes resultieren Strahlungskeulen mit unterschiedlichen Strahlrichtungen. Die Strahlbreite dieser Strahlungskeulen ist deutlich geringer als diejenige der Einzelantennen. Die oben beschriebene Summation wird durch eine 16-Punkte-DFT realisiert, wobei die 8 Werte der 8 Antennenkombinationen durch 8 Nullen ergänzt werden. Die diskreten Frequenzwerte n = 0,1,...,15 dieser DFT korrespondieren zu unterschiedlichen Phasendifferenzen $\Delta\varphi = \varphi(m)-\varphi(m-1) = 2\pi\cdot n/16$ zwischen benachbarten Antennenkombinationen und damit zu unterschiedlichen Azimutwinkeln $\alpha_{Az} = \arcsin(\Delta\varphi\cdot\lambda/(2\pi d))$ = $\arcsin(n\cdot\lambda/(16d))$ und können deshalb als Winkeltore bezeichnet werden. In Fig. 8b ist betragsmäßig der Verlauf w(j,l,n) des Spektrums der dritten DFT für die Verhältnisse nach Fig. 8a dargestellt, welche sich auf ein Objekt unter dem Azimutwinkel $\alpha_{Az}$ = 14.5° beziehen (zum dargestellten Phasenunterschied zwischen benachbarten Antennenkombinationen von 45°, was $\pi/4$ entspricht, korrespondieren n = 2 und für d = $\lambda/2$ der Azimutwinkel $\alpha_{Az}$ = $\arcsin(\pi/4)$ = 14.5°). Die dritte DFT dient nicht nur zur Ermittlung des Azimutwinkels, sondern sie erhöht durch ihre Integration auch die Detektionsempfindlichkeit - bei 8 Antennenkombinationen etwa um $10\cdot\log_{10}(8)$ = 9dB.

Bisher wurde für die Bestimmung des Azimutwinkels angenommen, dass das Objekt die Relativgeschwindigkeit Null hat. Falls dies nicht der Fall ist, ändert sich die Phase zwischen den Antennenkombinationen noch zusätzlich in linearer Weise proportional zur Relativgeschwindigkeit, da die Empfangssignale der 8 aufeinanderfolgenden Antennenkombinationen gemäß Fig. 2 einen jeweiligen zeitlichen Versatz von 10$\mu$s aufweisen und sich die Entfernung während diesem Zeitraum jeweils leicht ändert. Da jede dritte DFT zu einem Entfernung-Relativgeschwindigkeit-Tor und damit zu einer bestimmten Relativgeschwindigkeit gehört, kann man die von der Relativgeschwindigkeit generierte lineare Phasenänderung über die 8 Antennenkombinationen entweder vor oder nach der dritten DFT kompensieren. Bei einer Kompensation vor der DFT muss man die Phase der komplexen Eingangswerte verschieben, bei Kompensation nach der DFT muss man die zu den Ausgangswerten gehörigen diskreten Frequenzwerte n verschieben. Auf Grund der oben erläuterten Mehrdeutigkeiten für die Relativgeschwindigkeit führt diese Kompensation zu unterschiedlichen Azimutwinkeln abhängig von der verwendeten Hypothese für die mehrdeutige Relativgeschwindigkeit.

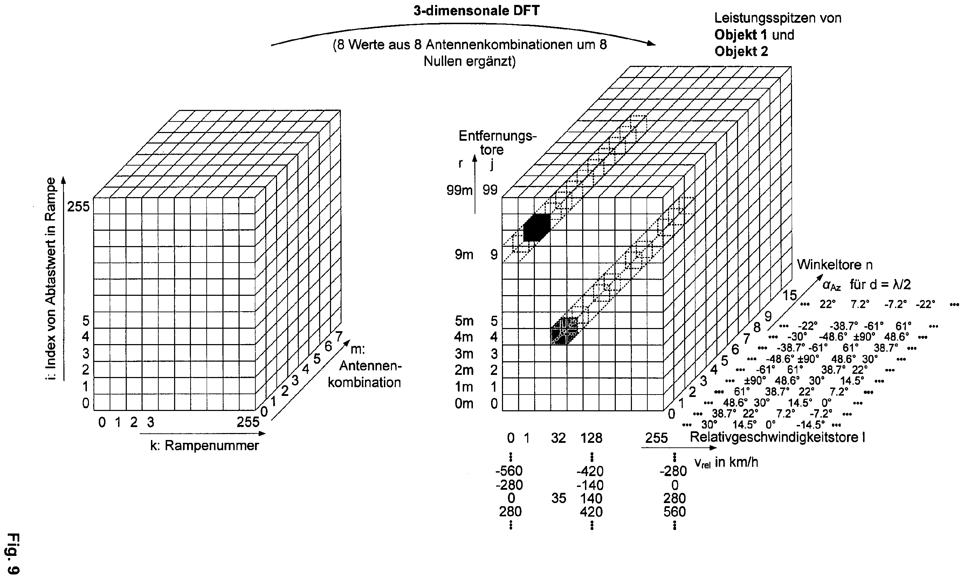

Nach dieser dritten DFT für die Azimutwinkel (inkl. der Kompensation der von der Relativgeschwindigkeit generierten linearen Phasenänderung über die Antennenkombinationen) ergibt sich ein dreidimensionales komplexwertiges Spektrum, wobei die einzelnen Zellen als Entfernung-Relativgeschwindigkeit-Winkel-Tore bezeichnet werden können und durch Objekte Leistungsspitzen am jeweils zugehörigen Entfernung-Relativgeschwindigkeit-Winkel-Tor auftreten (siehe Fig. 9; links Daten vor dreidimensionaler DFT, rechts danach). Durch Bestimmung der Leistungsspitzen kann man also Objekte detektieren und ihre Maße Entfernung, Relativgeschwindigkeit (abgesehen von eventuellen Mehrdeutigkeiten, s. o.) und Azimutwinkel (zu jeder Mehrdeutigkeitshypothese der Relativgeschwindigkeit korrespondiert ein Wert, siehe Fig. 9) ermitteln. Da Leistungsspitzen bedingt durch die DFT-Fensterungen auch in benachbarten Zellen noch Pegel aufweisen, kann man die Objektmaße durch Interpolation in Abhängigkeit dieser Pegel noch wesentlich genauer als die Torbreiten bestimmen. Es sei bemerkt, dass die Fensterfunktionen der drei DFTs so gewählt werden, dass einerseits die Leistungsspitzen nicht zu breit werden (für eine genügende Objekttrennung), aber andererseits auch die Nebenkeulen der Fensterspektren nicht zu hoch werden (um auch schwach reflektierende Objekte in Anwesenheit stark reflektierender Objekte erkennen zu können). Aus der Höhe der Leistungsspitzen kann als viertes Objektmaß noch dessen Reflektionsquerschnitt geschätzt werden, welcher angibt, wie stark das Objekt die Radarwellen reflektiert.

Die beschriebene Detektion von Objekten und die Bestimmung der zugehörigen Objektmaße stellen einen Messzyklus dar und liefern ein Momentanbild des Umfeldes; dies wird etwa alle 30ms zyklisch wiederholt. Zur Beurteilung der Umfeldsituation werden die Momentanbilder über aufeinanderfolgende Zyklen hinweg verfolgt, gefiltert und ausgewertet; Gründe dafür sind insbesondere:

- einige Größen können nicht direkt in einem Zyklus, sondern nur aus der Änderung über aufeinanderfolgenden Zyklen bestimmt werden (z. B. Längsbeschleunigung und Quergeschwindigkeit),

- die Bewegung von Objekten kann über mehrere Zyklen plausibilisiert werden, woraus eine robustere und sicherere Umfeldbeschreibung resultiert; so muss z. B. die sich über aufeinanderfolgende Zyklen ergebende Änderung der Entfernung zur gemessenen (radialen) Relativgeschwindigkeit passen, was Redundanz und damit zusätzliche Sicherheit in der Umfeldbeschreibung ergibt,

- Verringerung von Messrauschen durch zeitliche Filterung über mehrere Zyklen.

Das Verfolgen und Filtern von Objektdetektionen über aufeinanderfolgende Zyklen wird auch als Tracking bezeichnet. Dabei werden für jedes Objekt aus den getrackten Objektmaßen des aktuellen Zyklus Werte für den nächsten Zyklus prädiziert. Diese Prädiktionen werden mit den im nächsten Zyklus als Momentaufnahme detektierten Objekte und deren Objektmaße verglichen, um diese passend einander zuzuordnen. Dann werden die zum selben Objekt gehörigen prädizierten und gemessenen Objektmaße fusioniert, woraus sich die aktuellen getrackten Objektmaße ergeben, welche somit über aufeinanderfolgende Zyklen gefilterte Werte darstellen. Falls bestimmte Objektmaße in einem Zyklus nicht eindeutig bestimmt werden können, sind beim Tracking die unterschiedlichen Hypothesen zu berücksichtigen. Aus den getrackten Objekten und den zugehörigen getrackten Objektmaßen wird die Umfeldsituation für die jeweilige Fahrerassistenzfunktion analysiert und interpretiert, um daraus das oder die relevanten Objekte und damit die entsprechenden Aktionen abzuleiten.

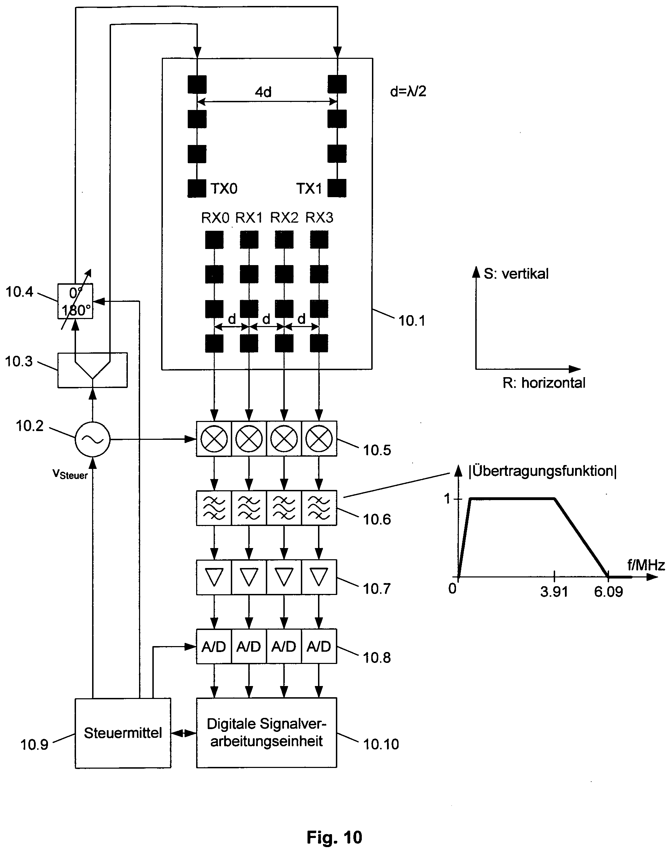

**Ausführung 2 nach Fig. 10**

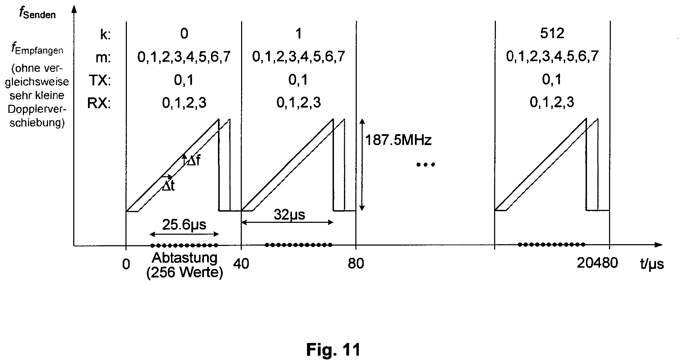

Die bisher betrachtete Ausführung des Sensors nach Fig. 1 hat den Nachteil, dass die 8 Antennenkombinationen sequentiell betrieben werden, d. h., es wird immer nur auf einer Antennenkombination empfangen - dies wirkt sich negativ auf die Systemempfindlichkeit aus. Diesen Nachteil behebt die Anordnung nach Fig. 10. Beide Sendeantennen TX0 und TX1 werden parallel betrieben, und die Signale der 4 Empfangsantennen RX0-RX3 werden parallel ausgewertet. Dazu wird das Ausgangssignal des Hochfrequenz-Oszillators 10.2 über den Leistungsteiler 10.3 gleichzeitig an beide Sendeantennen angelegt, und empfangsseitig gibt es bis zu den digitalen Signalverarbeitungsmitteln 4 parallele Kanäle. Bei jeder Frequenzrampe werden somit beide Sendeantennen benutzt und es werden die Signale von allen 4 Empfangsantennen ausgewertet, wobei die Frequenzrampen und die Abtastung während den Frequenzrampen nun zeitlich um den Faktor 4 gestreckt sind, d. h., die nun 512 Frequenzrampen haben eine jeweilige Dauer von $32\mu s$ und werden alle $40\mu s$ periodisch wiederholt, und die Abtastung der 256 Werte geschieht mit 10MHz, also alle 100ns (siehe Fig. 11).

Um in den Empfangssignalen die Anteile beider Sendeantennen trennen zu können, befindet sich vor der Sendeantenne TX1 der schaltbare Invertierer 10.4 (die Ansteuerung des schaltbaren Invertierers erfolgt aus den Steuermitteln 10.9). Der schaltbare Invertierer ist jede zweite Frequenzrampe aktiv, d. h., die Phasenlage der Sendeantenne TX1 wird bei jeder zweiten Frequenzrampe um 180° gegenüber den anderen Frequenzrampen verschoben. Dadurch alterniert die Phase der Empfangssignale, welche durch an einem Objekt reflektierte Sendesignale von TX1 erzeugt sind, von Frequenzrampe zu Frequenzrampe um 180° zusätzlich zur Änderung durch die Relativgeschwindigkeit des Objekts. Dadurch haben diese von TX1 stammenden Empfangssignale vor der zweiten DFT eine zusätzliche Phasenmodulation von 180° mit der Periodenlänge 2, was bei der zweiten DFT zu einer Verschiebung des Spektrums um die halbe DFT-Länge und damit 12.5kHz führt.

Die zweite DFT hat nun die Länge 512 (es gibt 512 Frequenzrampen) und wird für die vier Empfangskanäle und jedes Entfernungstor bestimmt. Durch die Phasenmodulation von TX1 erzeugt ein Objekt in der zweiten DFT in jedem Empfangskanal und im entsprechenden Entfernungstor zwei Leistungsspitzen im Abstand von 12.5kHz; die Leistungsspitze an der zur Relativgeschwindigkeit korrespondierenden Frequenz stammt von der Sendeantenne TX0, die um 12.5kHz verschobene Leistungsspitze von der Sendeantenne TX1. Damit sind die von den beiden Sendeantennen stammenden Anteile separiert.

Für die dritte DFT werden die 8 Antennenkombinationen dadurch generiert, dass für jeden der 4 Empfangskanäle (von den 4 Empfangsantennen) die untere Hälfte (0-12.5kHz) der zweiten DFT für TX0 und die obere Hälfte (12.5kHz-25kHz) für TX1 verwendet wird, wobei die obere Hälfte um 12.5kHz nach unten auf denselben Dopplerfrequenzbereich 0-12.5kHz wie die untere Hälfte verschoben wird. Damit gibt es wieder nur 256 Relativgeschwindigkeitstore wie bei der ursprünglichen Ausführung 1. Nach der dritten DFT ergibt sich als einziger Unterschied zu der ursprünglichen Anordnung, dass unterschiedliche Hypothesen für die Relativgeschwindigkeit nicht mehr unterschiedliche Azimutwinkel bedeuten, sondern es ergibt sich immer derselbe Azimutwinkel (im Datenquader der dreidimensionalen DFT nach Fig. 9 ändert sich also nur, dass beim Azimutwinkel immer die zum Relativgeschwindigkeitsbereich 0-280km/h gehörenden Werte gelten); Grund dafür ist, dass es zwischen den Empfangssignalen der 8 Antennenkombinationen keinen zeitlichen Versatz mehr gibt.

Anstatt der oben erläuterten alternierenden Phasenvariation von TX1 um 180° könnte man sie auch zufällig gestalten, d. h., von Frequenzrampe zu Frequenzrampe wird der Zustand des schaltbaren Invertierers zufällig bestimmt. Dann wäre die zweite DFT zweimal zu bestimmen, einmal mit und einmal ohne Korrektur der Phasenvariation. In der mit Phasenkorrektur gerechneten DFT würden die von der Sendeantenne TX1 herrührenden Empfangssignale zu Leistungsspitzen führen, während die von der Sendeantenne TX0 herrührenden Empfangssignale ein etwa 27dB darunterliegendes Rauschen erzeugen würden; in der ohne Phasenkorrektur gerechneten DFT wären die Verhältnisse gerade vertauscht. Dadurch wäre auch wieder eine Trennung beider Anteile möglich. Der Eindeutigkeitsbereich der Relativgeschwindigkeit würde sich dabei verdoppeln.

Durch die Verwendung von 4 parallelen Empfangskanälen erhöht sich die Systemempfindlichkeit um 6dB, da die Bandbreite der Bandpassfilter 10.6 gegenüber der ursprünglichen Ausführung um den Faktor 4 reduziert ist (die Abtastung während der Frequenzrampen ist um Faktor 4 langsamer, da die Frequenzrampen um diesen Faktor länger sind). Wegen der doppelten Länge 512 der zweiten DFT ergibt sich zusätzlich ein um 3dB höherer Integrationsgewinn. Für den Fall, dass pro Sendeantenne während den Frequenzrampen unverändert viel Leistung abgestrahlt wird, ergibt sich somit insgesamt eine Erhöhung der Systemempfindlichkeit um 9dB. Halbiert sich die Sendeleistung pro Sendeantenne (z. B. wegen der gleichzeitigen Speisung von zwei Antennen aus einer Quelle oder weil die Gesamtsendeleitung auf Grund von Zulassungsvorschriften beschränkt ist), ergibt sich eine Erhöhung der Systemempfindlichkeit um 6dB.

Abschließend sei erwähnt, dass in der hier betrachteten Ausführung 2 nach Fig. 10 die 4 parallelen A/D-Wandler auch durch einen einzigen A/D-Wandler mit einem vorgeschalteten Multiplexer ersetzt werden könnten; dieser A/D-Wandler würde dann mit demselben Takt von 40MHz arbeiten wie in der ursprünglichen Ausführung 1 nach Fig. 1.

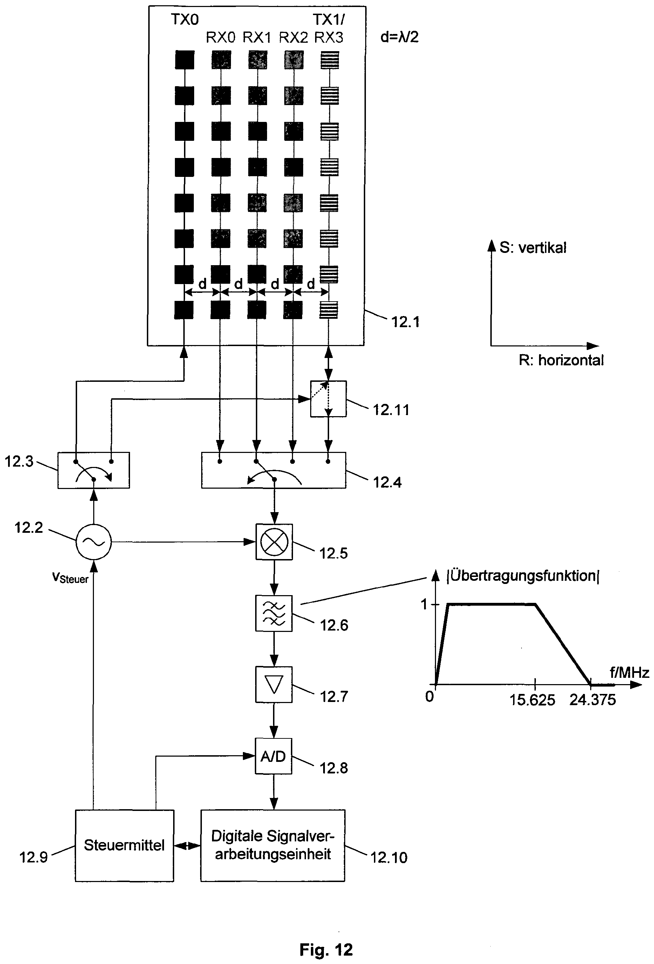

## Anordnung 3 nach Fig. 12

Bei den bisher betrachteten Anordnungen nach Fig. 1 und Fig. 10 waren die Sendeantennen über den Empfangsantennen angeordnet, da sich bei Anordnung in einer Ebene (also wenn die Sendeantennen nach unten gerückt worden wären) die Patches berührt hätten, was nicht realisierbar ist. Durch die Anordnung der Sende- und Empfangsantennen übereinander können diese bei vorgegebener Sensorhöhe aber nur etwa halb so hoch sein wie bei einer Anordnung in einer Ebene, woraus in Elevationsrichtung eine geringere Strahlbündelung und damit ein geringerer Antennengewinn resultiert. Dadurch erhöht sich zum einen der vertikale Erfassungsbereich, was für bestimmte Funktionen nachteilig sein kann (z. B. weil Brücken schwer von stehenden Fahrzeugen unterschieden werden können), und zum anderen reduziert sich die Systemempfindlichkeit.

Diese Einschränkung in der Anordnung der Antennen kann man dadurch vermeiden, dass wenigstens eine Antenne sowohl zum Senden, als auch zum Empfangen genutzt wird. Fig. 12 zeigt als Beispiel eine Anordnung, bei welcher die rechte Antenne als Sendeantenne TX1 und Empfangsantenne RX3 genutzt wird; der horizontale Abstand der Empfangsantennen zueinander ist weiterhin d = $\lambda$/2, der der Sendeantennen weiterhin 4d = 2$\lambda$.

Kann die rechte Antenne nicht gleichzeitig als Sende- und Empfangsantenne arbeiten, sondern nur zeitlich ihre Funktion zeitlich zwischen Sende- und Empfangsantenne wechseln, so ist die achte Antennenkombination aus Sendeantenne TX1 und Empfangsantenne RX3 nicht möglich, so dass es nur 7 Antennenkombinationen gibt; für die dritte DFT ist dann das Signal der achten Antennenkombination zu Null zu setzen. Im anderen Fall, also wenn die rechte Antenne gleichzeitig als Sende- und Empfangsantenne arbeiten kann, sind alle 8 Antennenkombinationen möglich.

Damit eine Antenne sowohl zum Senden, als auch zum Empfangen genutzt werden kann, muss diese Antenne alternierend oder permanent mit der HF-Erzeugung und dem Empfangsmischer verbunden sein; dies lässt sich beispielsweise mit folgenden Ausführungsformen für das Verbindungselement 12.11 realisieren:

- Multiplexer: Antenne kann ihre Funktion zeitlich zwischen Sende- und Empfangsantenne wechseln, aber nicht gleichzeitig senden und empfangen; im Multiplexer kommt es typischerweise zu Leistungsverlusten im Bereich von 3dB,

- Zirkulator: erlaubt gleichzeitiges Senden und Empfangen ohne Leistungsverluste, ist aber sehr teuer,

- Kopplerstrukturen (z. B. Ringkoppler oder Wilkinson-Teiler): erlauben ebenfalls gleichzeitiges Senden und Empfangen jedoch mit Leistungsverlusten (3-4dB), ihre Kosten sind aber vernachlässigbar, da sie nur aus gedruckten Strukturen bestehen.

Falls es im verwendeten Verbindungselement zu Leistungsverlusten kommt und diese nicht durch entsprechend unterschiedliche Sendeleistung kompensiert werden, haben die Empfangsignale der unterschiedlichen Antennenkombinationen nicht denselben Pegel; dies ist bei den Winkelbildungsverfahren (z. B. bei der digitalen Strahlformung) zu berücksichtigen und gegebenenfalls zu kompensieren.

Würde man in obigem Beispiel nach Fig. 12 die rechte und die linke Antenne jeweils zum gleichzeitigen Senden und Empfangen benutzen können, so ließen sich 9 Antennenkombinationen mit horizontal äquidistanten relativen Phasenzentren generieren.

Damit alle Antennen in ihrer Umgebung auf der Platine möglichst ähnliche Verhältnisse sehen, könnte man noch links bzw. rechts der äußeren Antennen TX0 und TX1/RX3 im Abstand d = $\lambda/2$ sogenannte Blindantennen mit selber Struktur wie die Nutzantennen (also eine Antennenspalte mit 8 Patches) anordnen; diese Blindantennen wären dann unter Anpassung abzuschließen. Dadurch würden alle Antennen in gleicher Weise von den jeweiligen Nachbarantennen beeinflusst werden (insbesondere durch Verkopplung), was für die Winkelbildungsverfahren unkritischer ist als eine unterschiedliche Beeinflussung durch Nachbarantennen.

**Ausführung 4 nach Fig. 13**

Die bisher betrachteten Ausführungen hatten alle nur die Möglichkeit, den Azimutwinkel von Objekten zu messen, nicht jedoch den Elevationswinkel. Letzteres wäre aber für viele Funktionen vorteilhaft, insbesondere wenn auf stehende Objekte auf der Fahrbahn (Fahrzeuge, Fußgänger) reagiert werden soll, um diese von Objekten über der Fahrbahn (Brücken, Schilder) oder kleinen auf der Fahrbahn liegenden Objekten (z. B. Coladose) sowie Reflektionen von der Straßenoberfläche (z. B. durch unebenen Plattenstoß) unterscheiden zu können.

Um den Elevationswinkel messen bzw. schätzen zu können, müssen die relativen Phasenzentren der Antennenkombinationen unterschiedliche vertikale Lage haben (das relative Phasenzentrum einer Kombination einer Sende- und einer Empfangsantenne ist hier definiert als Summe der beiden Vektoren von einem Referenzpunkt zu den Phasenzentren der Sende- und der Empfangsantenne). In der nun beispielhaft betrachteten Antennenanordnung nach Fig. 13 sind die beiden Empfangsantennen RX1 und RX3 um s = $\lambda/2$ gegenüber den anderen zwei Empfangsantennen RX0 und RX2 nach unten versetzt; ansonsten unterscheidet sich die Ausführung nach Fig. 13 nicht von der ursprünglichen Ausführung nach Fig. 1.

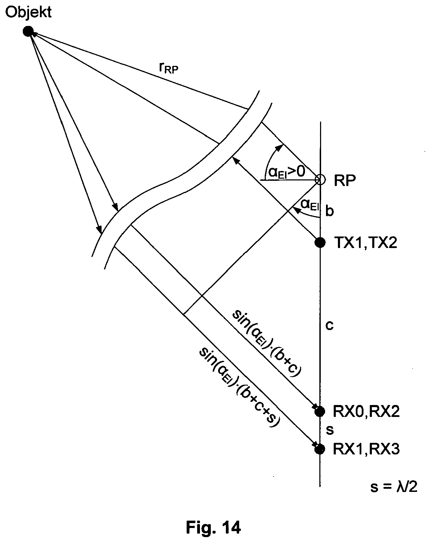

In Fig. 14 sind in horizontaler Projektion (also Platine 13.1 von Seite gesehen) die Phasenzentren der Antennen sowie die Strahlengänge zu einem weit entfernten relativ zum Sensor ruhenden Objekt bei Azimutwinkel $\alpha_{Az} = 0$ und Elevationswinkel $\alpha_{El} > 0$ (positives $\alpha_{El}$ bedeute oben) dargestellt (das Objekt ist so weit entfernt, dass die Strahlengänge als parallel angenommen werden können, d. h., das Objekt befindet sich im Fernfeld der Antennenanordnung). Die Weglänge r(m) für die Antennenkombination m = 4·$m_{TX}$+$m_{RX}$ von der Sendeantenne TX$m_{TX}$ zum Objekt und zurück zur Empfangsantenne RX$m_{RX}$ ergibt sich zu

$$r(m) = 2 \cdot r_{RP} + \sin(\alpha_{El}) \cdot (b+b+c+\mathrm{mod}(m_{RX},2) \cdot s)$$

$$= 2 \cdot r_{RP} + \sin(\alpha_{El}) \cdot (2b+c+\mathrm{mod}(m,2) \cdot s) \quad ,$$

wobei $r_{RP}$ die Weglänge von einem Referenzpunkt RP auf der Antennenplatine zum Objekt ist, b der vertikale Abstand zwischen Referenzpunkt und Sendeantennen, c der vertikale Versatz zwischen Sendeantennen und den beiden oberen Empfangsantennen RX0 und RX2 und mod(.,2) die Modulofunktion zu 2. Die Größe (2b+c+mod(m,2)·s) stellt den vertikalen Abstand des relativen Phasenzentrums der Antennenkombination m zum Referenzpunkt RP dar und ist die Summe aus vertikalem Abstand der zugehörigen Sende- und Empfangsantenne zum Referenzpunkt.

Der Phasenunterschied $\Delta\varphi_{El} = \varphi(1)-\varphi(0)$ zwischen den Empfangswellen und damit den Empfangssignalen für die Antennenkombinationen m=1,3,5,7 zu den unteren Empfangsantennen und für die Antennenkombinationen m=0,2,4,6 zu den oberen Empfangsantennen ergibt sich auf Grund der unterschiedlichen Weglängen r(m) zu

$$\Delta\varphi_{El} = -2\pi/\lambda \cdot [r(1) - r(0)] = -2\pi/\lambda \cdot \sin(\alpha_{El}) \cdot s \quad .$$

Die Phase $\varphi(m)$ der Empfangssignale alterniert also mit der Periodenlänge 2 über die Nummer m=0,1,...,7 der Antennenkombinationen um diesen Wert $\Delta\varphi_{EI}$. Wird nun noch ein im Allgemeinen nichtverschwindender Azimutwinkel $\alpha_{Az}$ betrachtet, so weist die Phase $\varphi(m)$ der Empfangssignale zusätzlich noch einen sich linear über die Antennenkombinationen m ändernden Anteil auf (siehe vorne) und ergibt sich insgesamt zu

$$\varphi(m) = \varphi(0) + 2\pi/\lambda\cdot\sin(\alpha_{Az})\cdot d\cdot m - 2\pi/\lambda\cdot\sin(\alpha_{EI})\cdot s\cdot mod(m,2) \ .$$

Sofern es im zugehörigen Entfernung-Relativgeschwindigkeit-Tor (j,l) nur dieses eine Objekt gibt, so ergeben sich die dortigen komplexen Werte v(j,l,m) nach der zweiten DFT über die 8 Antennenkombinationen m = 0,1,...,7 zu

$$v(j,l,m) = K\cdot\exp[j\cdot(\varphi(0) + 2\pi/\lambda\cdot\sin(\alpha_{Az})\cdot d\cdot m - 2\pi/\lambda\cdot\sin(\alpha_{EI})\cdot s\cdot mod(m,2))]$$

$$= K\cdot\exp[j\cdot(\varphi(0)] \cdot \exp[j\cdot 2\pi/\lambda\cdot\sin(\alpha_{Az})\cdot d\cdot m] \cdot \exp[-j\cdot 2\pi/\lambda\cdot\sin(\alpha_{EI})\cdot s\cdot mod(m,2)] \ ,$$

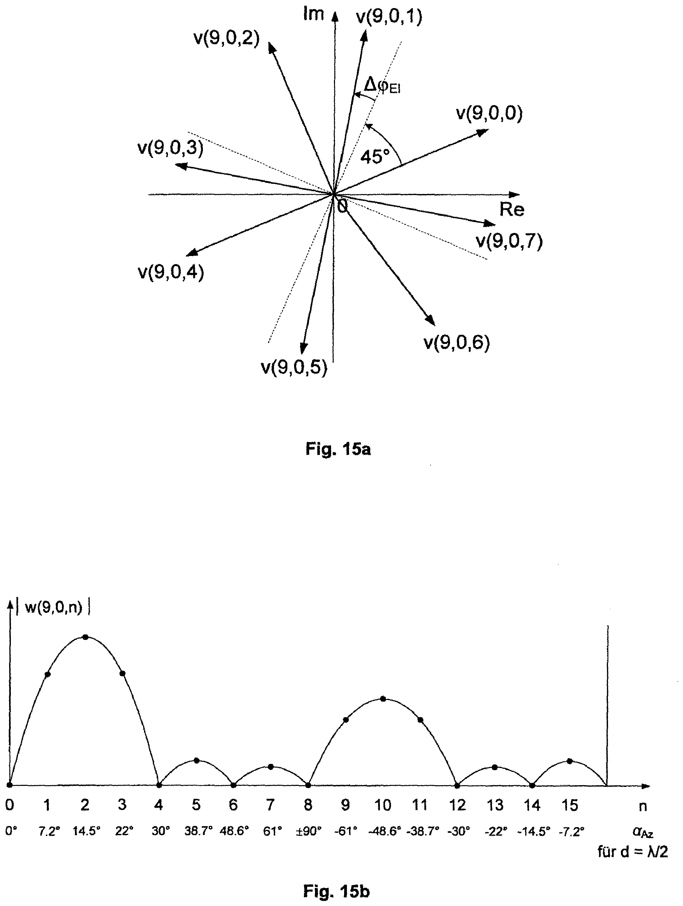

wobei K der konstante Betrag dieser Werte und exp die Exponentialfunktion ist; das sich für einen kleinen negativen Elevationswinkel $\alpha_{EI}$ ergebende Beispiel nach Fig. 15a zeigt, dass im Vergleich zu dem in Fig. 8a dargestellten Verlauf v(9,0,m) für die ursprüngliche Ausführung 1 nun jeder zweite Zeiger um die Phase $\Delta\varphi_{EI}$ verschoben ist.

Der durch den Versatz der Empfangsantennen bewirkte zusätzliche Faktor f(m) = $\exp[-j\cdot 2\pi/\lambda\cdot\sin(\alpha_{EI})\cdot s\cdot mod(m,2)]$ ändert das in der dritten DFT gebildete Spektrum w(j,l,n) von v(j,l,m) wie nachfolgend erläutert. Für gerade m = 0,2,... hat dieser Faktor den Wert 1, für ungerade m = 1,3,... den Wert $\exp[-j\cdot 2\pi\lambda\cdot\sin(\alpha_{EI})\cdot s]$. Das Spektrum F(n) dieses mit der Periodenlänge 2 alternierenden Faktors hat zwei Leistungsspitzen (wie man sich aus der Transformationsgleichung leicht ableiten kann), eine Leistungsspitze bei der Frequenz n = 0 mit dem Mittelwert der beiden Werte multipliziert mit der DFT-Länge N:

$$F(0) = N/2 \cdot (1+\exp[-j\cdot 2\pi/\lambda\cdot\sin(\alpha_{EI})\cdot s]) \ ,$$

und eine zweite Leistungsspitze bei der halben DFT-Länge, also der Frequenz n = N/2 mit der Differenz der beiden Werte multipliziert mit der halben DFT-Länge:

$$F(N/2) = N/2 \cdot (1-\exp[-j\cdot 2\pi/\lambda\cdot\sin(\alpha_{EI})\cdot s]) \ .$$

Das gesamte Spektrum w(j,l,n) ergibt sich durch Faltung von F(n) mit dem ursprünglichen Spektrum, welches eine Leistungsspitze bei der zum Azimutwinkel $\alpha_{Az}$ korrespondierenden Frequenz $n_{Az}$ besitzt; es besitzt also zwei Leistungsspitzen bei der ursprünglichen Frequenz $n_{Az}$ und der um die halbe DFT-Länge beabstandeten Frequenz $n_{Az}$+N/2, wobei für das Verhältnis der komplexen Spektralwerte dieser beiden Leistungsspitzen gilt:

$$w(j,l,n_{Az}) / w(j,l,n_{Az}+N/2) = (1+\exp[-j\cdot 2\pi/\lambda\cdot\sin(\alpha_{EI})\cdot s]) / (1-\exp[-j\cdot 2\pi/\lambda\cdot\sin(\alpha_{EI})\cdot s]) \ .$$

Fig. 15b zeigt als Beispiel den Betrag des Spektrums w(9,0,n) zum im Fig. 15a dargestellten Verlauf von v(9,0,m); neben der Leistungsspitze bei n = $n_{Az}$ = 2 zum Azimutwinkel $\alpha_{Az}$ = 14.5° gibt es eine zweite Leistungsspitze bei n = 10, also die Hälfte der DFT-Länge N = 16 entfernt.

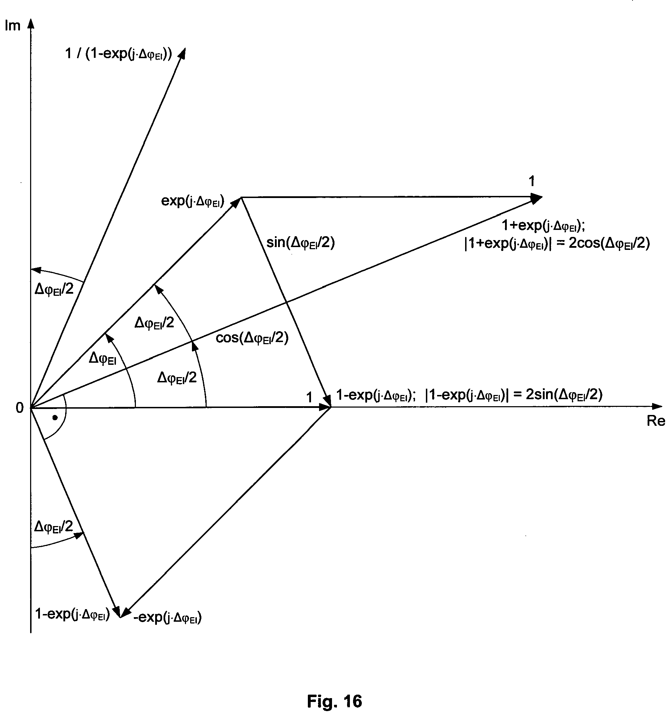

Aus dem Verhältnis w(j,l,$n_{Az}$)/w(j,l,$n_{Az}$+N/2) lässt sich der Elevationswinkel $\alpha_{EI}$ bestimmen. Dazu wird die rechte Seite der obigen Beziehung mit Hilfe der Fig. 16 wie folgt umgeschrieben:

$$w(j,l,n_{Az}) / w(j,l,n_{Az}+N/2) = \exp(j\cdot\pi/2) \cdot \cos(\Delta\varphi_{EI}/2) / \sin(\Delta\varphi_{EI}/2) = j / \tan(\Delta\varphi_{EI}/2)$$

$$mit \ \Delta\varphi_{EI} = -2\pi/\lambda\cdot\sin(\alpha_{EI})\cdot s \ ;$$

durch Auflösung nach dem Elevationswinkel $\alpha_{EI}$ ergibt sich für $\Delta\varphi_{EI} \in ]-\pi, \pi[$:

$$\alpha_{El} = \arcsin(-\lambda/(\pi \cdot s) \cdot \arctan[j \cdot w(j,l,n_{Az}+N/2) \, / \, w(j,l,n_{Az})]) \quad .$$

Damit lässt sich der Elevationswinkel $\alpha_{El}$ im zu $\Delta\varphi_{El}$ korrespondierenden Bereich $]-\arcsin(\lambda/(2s),+\arcsin(\lambda/(2s)[$ eindeutig bestimmen (für den im Beispiel betrachteten Fall $s = \lambda/2$ also im Bereich $]-90°,+90°[$). Allerdings gilt das nur unter der Voraussetzung, dass der Frequenzwert $n_{Az}$ zum Azimutwinkel $\alpha_{Az}$ bekannt ist. Da man ja aber zu einem Objekt im Allgemeinen zwei Leistungsspitzen mit halber DFT-Länge Abstand hat, gibt es zwei Hypothesen für den Azimutwinkel mit jeweils unterschiedlichem Elevationswinkel. Mit Hilfe des Trackings (also der Beobachtung von Objekten über mehrere Zyklen) lässt sich bei Bewegung des eigenen Fahrzeugs im Allgemeinen erkennen, welche Hypothese die richtige ist, da sich nur für eine Hypothese ein sinnvoller Verlauf des Objektortes ergibt.

Für ideale Verhältnisse (kein Rauschen und punktförmig reflektierendes Objekt) ist in obiger Funktion das Argument der arctan-Funktion reellwertig, für andere Verhältnisse hat es aber im Allgemeinen noch einen komplexwertigen Anteil; durch Verwendung nachfolgender Beziehung wird dieser ignoriert:

$$\alpha_{El} = \arcsin(-\lambda/(\pi \cdot s) \cdot \arctan[Re(j \cdot w(j,l,n_{Az}+N/2) \, / \, w(j,l,n_{Az}))])$$

$$= \arcsin(\lambda/(\pi \cdot s) \cdot \arctan[Im(w(j,l,n_{Az}+N/2) \, / \, w(j,l,n_{Az}))]) \quad ,$$

wobei Re bzw. Im den Real- bzw. Imaginärteil des jeweiligen Argumentes darstellt.

Gibt es in einem Entfernung-Relativgeschwindigkeit-Tor bei einem Azimutwinkel mehrere Reflektionen aus unterschiedlichen Elevationswinkeln (bei stark ausgedehnten Objekten und bzw. oder wegen Spiegelungen an der Straßenoberfläche, s. u.), so können diese durch obige Formel zur Bestimmung des Elevationswinkels nicht aufgelöst, also getrennt werden; durch einen signifikanten komplexwertigen Anteil in der Größe $j \cdot w(j,l,n_{Az}+N/2)/w(j,l,n_{Az})$ kann man nur erkennen, dass es Reflektionen aus signifikant unterschiedlichen Elevationswinkeln geben muss.

Den dargestellten Ansatz zur Messung bzw. Schätzung von Elevationswinkeln kann man auch so interpretieren, dass in die digitale Strahlformung für den Azimutwinkel ein Monopulsverfahren für den Elevationswinkel eingelagert ist (Monopulsverfahren heißt, dass durch Phasenvergleich von zwei versetzten Antennen(gruppen) ein Winkel bestimmt wird). Dieser Ansatz hat den Vorteil, dass man zum einen alle auf äquidistanten Empfangsantennen beruhenden Auswerteverfahren (wie z. B. die einfache digitale Strahlformung mit einer DFT) beibehalten kann und dass man zum anderen für den Azimutwinkel keine Einbußen für die Genauigkeit und nur geringe Einbußen für die Trennfähigkeit hat (letzteres nur bei Objekten mit einem zur halben DFT-Länge korrespondierenden Azimutwinkelabstand, wenn für die Objekte eine Lage außerhalb der horizontalen Ebene möglich ist); bei einem konventionellen Ansatz zur gleichzeitigen Winkelmessung in Azimut und Elevation, welcher für die Antennenkombinationen zwei Gruppen übereinander ohne horizontalen Versatz zueinander aufweist, hätte man bei gleicher Anzahl an Antennenkombinationen für den Azimutwinkel eine Halbierung der Genauigkeit und Trennfähigkeit.

Es sei bemerkt, dass man den periodischen vertikalen Versatz der Antennenkombinationen grundsätzlich auch mit einer höheren Periodenlänge P als 2 ausgestalten kann. Durch ein Objekt außerhalb der horizontalen Ebene ergeben sich im Spektrum dann im Allgemeinen P Leistungsspitzen mit jeweiligem Abstand N/P, wobei N die DFT-Länge der digitalen Strahlformung ist; aus den Werten dieser Leistungsspitzen kann man wieder den Elevationswinkel bestimmen, wobei nun sogar eine Trennfähigkeit von Objekten über den Elevationswinkel möglich wird. Durch einen solchen Ansatz werden zwei digitale Strahlformungen (für Azimut und Elevation) in einer DFT überlagert.

Zu betonen ist, dass der hier vorgestellte Ansatz für eine Elevationsmessfähigkeit im Wesentlichen kostenneutral ist.

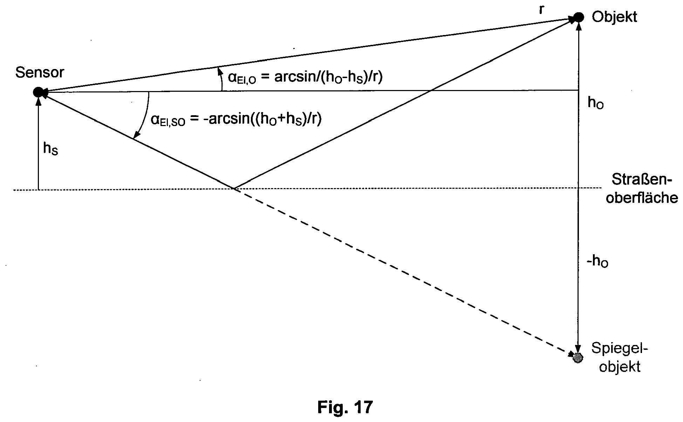

In realer Umgebung ist für die Elevationsmessung zu berücksichtigen, dass die Straßenoberfläche eine spiegelnde Eigenschaft hat; dies ist in Fig. 17 dargestellt. Ein Objekt empfängt Sendeleistung auf direktem und auf an der Straßenoberfläche gespiegeltem Weg. Für die am Objekt reflektierte vom Sensor empfangene Leistung gibt es ebenfalls beide Wege; dadurch sieht der Sensor zusätzlich zum realen Objekt ein Spiegelobjekt, welches näherungsweise gleiche (radiale) Entfernung wie das reale Objekt besitzt, aber um die Höhe $h_O$ des realen Objektes unterhalb der Straßenoberfläche liegt. Abhängig von der Höhe $h_S$ des Sensors über der Straßenoberfläche haben reales und Spiegelobjekt einen unterschiedlichen Betrag des Elevationswinkels, wobei die Differenz mit zunehmender Entfernung abnimmt. Die Phase der Empfangssignale von realem und Spiegelobjekt sind im Allgemeinen unterschiedlich, da sie sich in ihrer Entfernung geringfügig unterscheiden; diese Phasendifferenz ändert sich über der Entfernung r des realen Objekts. Die beschriebenen Effekte sind umso stärker ausgeprägt, je höher sich das reale Objekt über der Straßenoberfläche befindet.

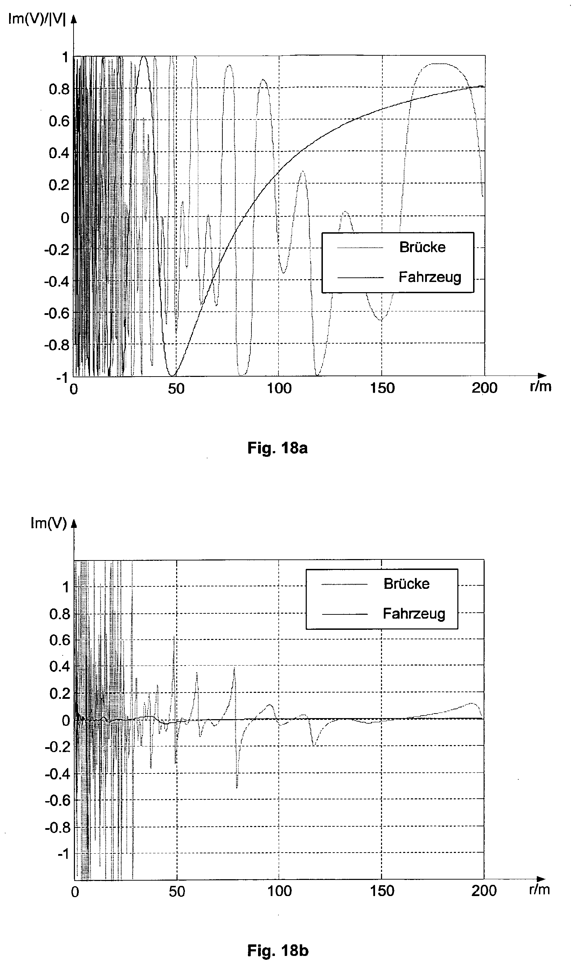

Zumindest für weiter entfernte Objekte befinden sich reales und Spiegelobjekt im selben Entfernung-Relativgeschwindigkeit-Tor; sie haben denselben Azimutwinkel, aber unterschiedliche Elevationswinkel. Für die oben beispielhaft betrachtete Periodenlänge 2 für den vertikalen Versatz der Empfangsantennen kann man beide Objekte nicht auflösen; im Mittel liegt der Reflektionsschwerpunkt etwa auf Höhe der Straßenoberfläche. Durch einen signifikanten komplexwertigen Anteil in dem Verhältnis $V = j·w(j,l,n_{Az}+N/2)/w(j,l,n_{Az})$ kann man aber erkennen, dass es Objekte in signifikant unterschiedlichen Elevationswinkeln geben muss. Da sich die Phasendifferenz zwischen den Empfangssignalen von realem und Spiegelobjekt über die Entfernung ändert, variiert über der Entfernung auch der komplexwertige Anteil des Verhältnisses V und damit die Größe Im(V)/|V|, welche im Folgenden als relativer Imaginärteil von V bezeichnet werden soll. Die entfernungsbezogene Variation des relativen Imaginärteils von V ist umso höher, je höher sich das reale Objekt über der Straßenoberfläche befindet. Abgesehen vom Nahbereich kann man dieses Kriterium zur Unterscheidung von relevanten Objekten auf der Fahrbahn (z. B. Fahrzeuge und Fußgänger) und unterfahrbaren Objekten (also Objekten über der Fahrbahn wie z. B. Brücken und Schilder) ausnutzen; z. B. kann man ab einer bestimmten entfernungsbezogenen Variation des relativen Imaginärteils von V auf ein unterfahrbares Objekt schließen. Fig. 18a zeigt als Beispiel den relativen Imaginärteil vom Verhältnis V über der Entfernung r für ein Fahrzeug (mittlere Höhe $h_O$ = 0.5m, vertikale Ausdehnung 0.3m) und eine Brücke (mittlere Höhe $h_O$ = 5m, vertikale Ausdehnung 0.3m), wobei die Sensorhöhe $h_S$ = 0.5m ist.

Des Weiteren kann man dieses Kriterium auch im näheren Bereich zur Unterscheidung von relevanten erhabenen Objekten auf der Fahrbahn (z. B. Fahrzeuge und Fußgänger) einerseits und andrerseits auf der Straße liegenden kleineren und damit überfahrbaren Objekten (z. B. Coladose) sowie Unebenheiten der Straßenoberfläche (z. B. durch versetzten Plattenstoß) verwenden. Für nicht oder wenig erhabene Objekte auf der Fahrbahn ist die entfernungsbezogene Variation des relativen Imaginärteils von V viel kleiner als für signifikant erhabene Objekte. Daneben kann man im Nahbereich auch den tatsächlich gemessenen Elevationswinkel benutzten, insbesondere weil durch die Elevationsstrahlbündelung die Reflektionen eines realen erhabenen Objekts signifikant größer sind als die Reflektionen seines Spiegelobjektes, so dass näherungsweise der tatsächliche Winkel des realen Objekts gemessen wird, woraus sich näherungsweise seine reale Höhe bestimmen lässt.

Neben dem relativen Imaginärteil des Verhältnisses $V = j·w(j,l,n_{Az}+N/2)/w(j,l,n_{Az})$ kann man grundsätzlich auch jedes andere Maß, welches wenigstens eine Abweichung gegenüber den sich bei nur einer Reflektion aus einem Elevationswinkel ergebenden Verhältnissen ausnutzt, verwenden, um daraus ein Kriterium zur Erkennung von unter- bzw. überfahrbaren Objekten abzuleiten. So kann man z. B. auch nur den absoluten Imaginärteil Im(V) des Verhältnisses V verwenden. Der Betrag dieses Maßes Im(V), insbesondere gefiltert über die Objektentfernung, und seine entfernungsbezogene Variation sind umso höher, je höher sich das reale Objekt über der Straßenoberfläche befindet; die Filterung des Betrags über die Objektentfernung kann linear sein (z. B. Mittelwert über einen Entfernungsabschnitt) oder nichtlinear (z. B. Maximum über einen Entfernungsabschnitt). Fig. 18b zeigt als Beispiel den Imaginärteil vom Verhältnis V über der Entfernung r für ein Fahrzeug (mittlere Höhe $h_O$ = 0.5m, vertikale Ausdehnung 0.3m) und eine Brücke (mittlere Höhe $h_O$ = 5m, vertikale Ausdehnung 0.3m), wobei die Sensorhöhe $h_S$ = 0.5m ist.

Des Weiteren kann man natürlich auch nicht nur eines, sondern mehrere Maße, welche jeweils wenigstens eine Abweichung gegenüber den sich bei nur einer Reflektion aus einem Elevationswinkel ergebenden Verhältnissen ausnutzen, verwenden, um daraus ein kombiniertes Kriterium zur Erkennung von unter- bzw. überfahrbaren Objekten abzuleiten.

Die Elevationsmessfähigkeit kann man auch zur Erkennung und gegebenenfalls Korrektur einer Fehljustage des Sensors in Elevationsrichtung bzw. zur Überwachung seiner Elevationsausrichtung benutzen. Zur Bestimmung der tatsächlichen Elevationsausrichtung eignen sich nur genügend weit entfernte bewegte Objekte, da bewegte Objekte (Fahrzeuge) von wenigen Spezialfällen abgesehen etwa auf gleicher Höhe liegen wie das eigene Fahrzeug und in genügender Entfernung die Straßenspiegelungen nur noch geringen Einfluss auf den gemessenen Elevationswinkel haben, da die Elevationswinkel von realem und Spiegelobjekt sich nur noch wenig unterscheiden (wie weit die Objekte entfernt sein müssen, hängt von der geforderten Genauigkeit für die Bestimmung der Elevationsausrichtung ab). Stationäre Objekte eigenen sich dagegen nicht, da sie in unterschiedlichen Elevationswinkeln liegen können (auf oder über Fahrbahn).

Misst man im Mittel für weit entfernte bewegte Objekte einen Elevationswinkel ungleich 0°, so weist der Sensor eine Fehlausrichtung um diesen mittleren gemessenen Elevationswinkel auf, da sich andere Fahrzeuge ja im Mittel etwa in horizontaler Richtung zum eigenen Fahrzeug, also bei realer Elevation 0° befinden; beispielsweise schaut der Sensor für einen mittleren gemessenen Elevationswinkel von +2° (Objekte liegen für Sensor um 2° über der Fahrbahn) um 2° nach unten.

Die Mittelung über gemessene Elevationswinkel von mehreren Objekten kann entweder linear, also z. B. durch gewichtete Mittelwertbildung erfolgen, besser geeignet sind aber nichtlineare Mittelungen, welche den Einfluss von Ausreißern in einer Messreihe reduzieren - als Beispiel sei der Median genannt.

Ausreißer im gemessenen Elevationswinkel bei den zur Bestimmung der Elevationsausrichtung verwendeten bewegten Objekten kann man zum Großteil durch z. B. folgende Maßnahmen schon prinzipiell vermeiden:

- Es werden nur Objekte genommen, welche sich auf der Fahrbahn des eigenen Fahrzeugs bewegen; damit können sich keine zur eigenen Fahrbahn höhenversetzte andere Fahrbahnen auswirken.

- Durch Spiegelungen an Tunneldecken und Brückenunterseiten wird die Elevationsmessung verfälscht; dies kann man aber meist durch einen signifikanten komplexwertigen Anteil im Verhältnis V = j·w(j,l,$n_{Az}$+N/2)/w(j,l,$n_{Az}$) erkennen. Solche Objekte sind also nicht zu benutzen. Erkennt man solche Objekte, kann man auch zur Sicherheit für einen gewissen Zeitraum gar keine Objekte zur Mittelung benutzen.

Falls es im System noch andere Tunnelerkennungsmechanismen gibt, so kann bei erkanntem Tunnel grundsätzlich kein Objekt verwendet werden.

Ist eine Fehlausrichtung des Sensors in Elevation erkannt, kann man diese leicht herauskalibrieren; dazu ist nur jeder zweite der sich über die 8 Antennenkombinationen ergebende Werte vor der dritten DFT um einen entsprechenden Phasenwert zu drehen.

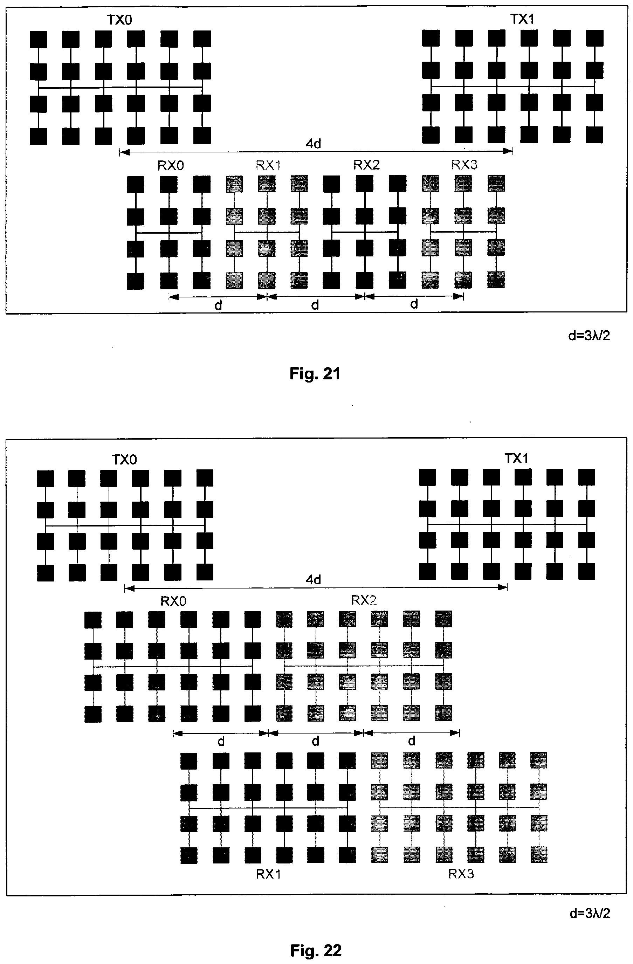

**Ausführungen 5-10 nach Fig. 21-26**

Die bisher betrachteten Ausführungen haben nur eine Spalte pro Einzelantenne (also pro Sende- und Empfangsantenne), wodurch sie in horizontaler Richtung (Azimut) sehr breit abstrahlen. Solche Anordnungen werden typischerweise für Nahbereichssensoren verwendet, da diese einen breiten horizontalen Erfassungsbereich besitzen müssen, dafür aber keine große Reichweite. Der horizontale Abstand d = $\lambda$/2 der Empfangsantennen zueinander ist dabei so gering gewählt, dass die Zuordnung zwischen den Phasendifferenzen $\Delta\varphi = \pi\sin(\alpha_{Az})$ benachbarter Antennenkombinationen und dem Azimutwinkel $\alpha_{Az}$ im Azimutbereich ]-90°,+90°[ eindeutig ist (eine durch den Elevationswinkel bedingte Phasenverschiebung bei vertikal versetzten Antennen sei hier nicht betrachtet).

Für Fernbereichssensoren hat man gegenüber Nahbereichssensoren die Anforderungen einer höheren Reichweite und damit Systemempfindlichkeit sowie einer höheren Messgenauigkeit und Trennfähigkeit für den Azimutwinkel; dafür darf der horizontale Erfassungsbereich eingeschränkt sein. Um diese Anforderungen zu realisieren, wird der Abstand der Antennen zueinander erhöht (z. B. um den Faktor 3 gegenüber der bisherigen Auslegung, so dass der Abstand zwischen den Empfangsantennen d = 3$\lambda$/2 und der Abstand zwischen den Sendeantennen 4d = 6$\lambda$ beträgt). Dadurch lassen sich zum einen Antennen mit mehreren Spalten und damit stärkere Bündelung in Azimutrichtung realisieren, woraus ein höherer Antennengewinn und damit eine höhere Systemempfindlichkeit resultieren (auf Kosten eines eingeschränkten azimutalen Erfassungsbereichs), und zum anderen wirken sich die azimutwinkelbedingte Phasendifferenzen $\Delta\varphi = 2\pi d/\lambda\cdot\sin(\alpha_{Az})$ benachbarter Antennenkombinationen auch entsprechend stärker aus, wodurch sich die Messgenauigkeit und Trennfähigkeit für den Azimutwinkel erhöhen.

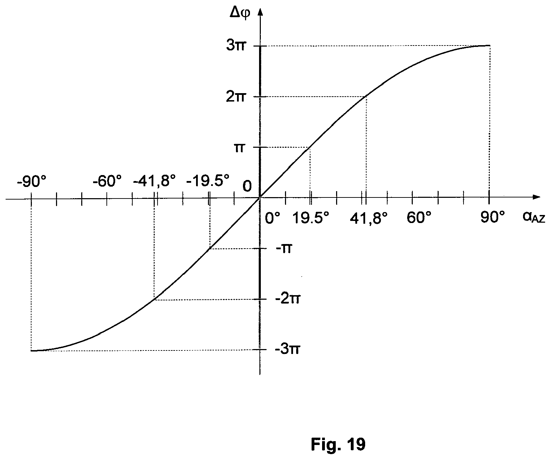

Der sich für d = 3$\lambda$/2 ergebende Zusammenhang $\Delta\varphi = 3\pi\sin(\alpha_{Az})$ zwischen Phasendifferenz $\Delta\varphi$ und Azimutwinkel $\alpha_{Az}$ ist in Fig. 19 dargestellt; zum Azimutwinkelbereich -90°...90° korrespondiert nun eine Änderung der Phasendifferenz von 6$\pi$. Da Phasen aber nur bis auf ein unbekanntes ganzzahliges Vielfaches von 2$\pi$ gemessen werden können, kommt es zu Mehrdeutigkeiten - so kann man z. B. zwischen den Azimutwinkeln -41.8°, 0° und +41.8° nicht unterscheiden, da sie mit einer Phasendifferenz $\Delta\varphi$ = 0 gemessen werden.

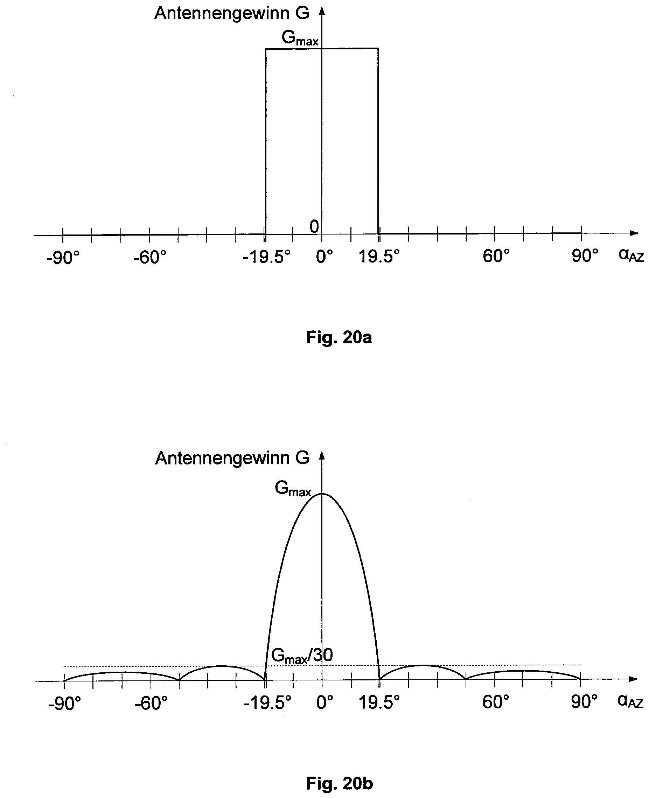

Diese Mehrdeutigkeiten werden vermieden, wenn die Einzelantennen für Senden und bzw. oder Empfangen nur einen derart eingeschränkten azimutalen Erfassungsbereich haben, dass dazu eine Änderung der Differenzphase $\Delta\varphi$ von maximal 2$\pi$ korrespondiert. Für das obige Zahlenbeispiel lässt sich diese Forderung durch den azimutalen Erfassungsbereich -19.5...+19.5 erfüllen. In Fig. 20a ist ein entsprechendes ideales Antennendiagramm dargestellt, welches für Azimutwinkel außerhalb dieses Bereiches jegliche Abstrahlung bzw. jeglichen Empfang unterdrückt. Real kann man solche Antennendiagramme mit scharfen Erfassungsgrenzen und kompletter Unterdrückung außerhalb nicht generieren. Fig. 20b zeigt ein realisierbares Antennendiagramm, welches außerhalb des Azimutbereichs -19.5...+19.5 wenigstens 15dB Unterdrückung hat. Auf Systemebene ergibt sich eine Unterdrückung vom doppelten Wert 30dB, sofern die Antennen sowohl für Senden als auch für Empfangen ein solches Antennendiagramm besitzen. Damit kann es nur noch für sehr stark reflektierende Objekte zu Mehrdeutigkeiten für den Azimutwinkel kommen.

Um die Mehrdeutigkeiten für den Azimutwinkel durch einen entsprechend eingeschränkten azimutalen Erfassungsbereich der Antennen für Senden und bzw. oder Empfangen weitgehend zu verhindern, muss horizontal gesehen die Breite dieser Antennen mindestens etwa doppelt so groß sein wie der Abstand d von horizontal aufeinanderfolgenden Empfangsantennen. Zur Erfüllung dieser Forderung werden nachfolgend fünf unterschiedliche Ansätze für planare Antennen vorgestellt:

- Die Sendeantennen sind vertikal gesehen in einer anderen Ebene (also einem anderen Bereich) als die Empfangsantennen angeordnet, d. h., sie liegen übereinander (siehe als Beispiel Fig. 21). Dadurch kann die horizontale Breite der Sendeantennen bis zu viermal größer als der Abstand d von horizontal aufeinanderfolgenden Empfangsantennen gewählt werden. Im Beispiel nach Fig. 21 haben nur die Sendeantennen den benötigten schmalen azimutalen Erfassungsbereich, nicht aber die Empfangsantennen; dadurch kann es für stärker reflektierende Objekte noch zu Mehrdeutigkeiten für den Azimutwinkel kommen. Es sei bemerkt, dass Fig. 21 ein Beispiel dafür darstellt, dass Form und Strahlcharakteristik der Sendeantennen prinzipiell unterschiedlich zur Form und Strahlcharakteristik der Empfangsantennen sein dürfen.

- Die horizontal aufeinanderfolgenden Empfangsantennen sind alternierend so vertikal versetzt, dass sie in E unterschiedlichen vertikalen Ebenen liegen; im gezeigten Beispiel nach Fig. 22 gibt es zwei Ebenen, der alternierende Versatz hat also die Periodenlänge 2 - die beiden Empfangsantennen RX0 und RX2 liegen eine Ebene über den anderen zwei Empfangsantennen RX1 und RX3. Bei Verwendung von E unterschiedlichen Ebenen für die Empfangsantennen kann ihre horizontale Breite bis zu E-mal größer als der Abstand d von horizontal aufeinanderfolgenden Empfangsantennen gewählt werden. Durch den vertikalen Versatz der Empfangsantennen ergibt sich implizit die oben beschriebene Elevationsmessfähigkeit.

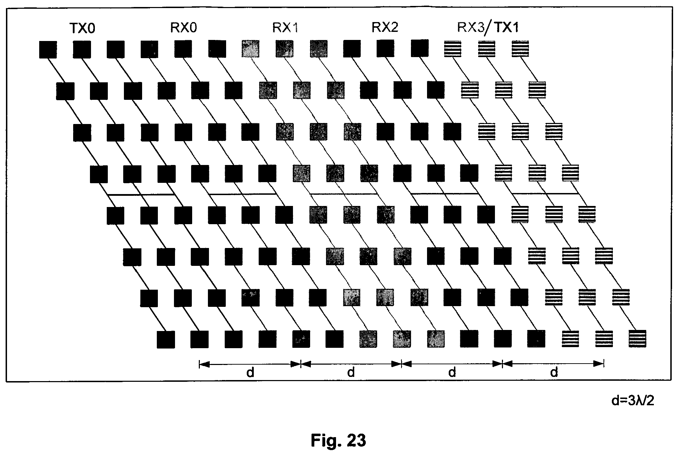

- Sende- und bzw. oder Empfangsantennen sind nicht senkrecht, sondern schräg zur Horizontalen angeordnet (siehe als Beispiel Fig. 23, wo eine der schrägen Antennen zum Senden und zum Empfangen benutzt wird). Dadurch kann man die horizontale Breite von Antennen fast beliebig größer als ihren Abstand machen. Allerdings hat man die hohe Bündelung der Strahlcharakteristik nur für Elevationswinkel im Bereich von 0°, also für Objekte näherungsweise in der horizontalen Ebene - abgesehen vom absoluten Nahbereich liegen dort aber alle aus Systemsicht relevanten Objekte. Für signifikant von 0° abweichende Elevationswinkel hat man in horizontaler Richtung weniger Strahlbündelung, was sich höchstens im absoluten Nahbereich und für über der Straße befindliche Objekte negativ auswirken kann. Die geringere Strahlbündelung für signifikant von 0° abweichende Elevationswinkel kann man auf Systemebene prinzipiell noch dadurch vermeiden, dass Sende- und Empfangsantennen in unterschiedliche Richtungen gekippt werden (die einen nach rechts, die anderen nach links).

- Antennen sind in horizontaler Richtung ineinander verzahnt (siehe als Beispiele Fig. 24a und 24b, wo die Empfangsantennen ineinander verzahnt sind). Dadurch kann man die horizontale Breite von Antennen bis zu doppelt so groß wie ihren Abstand machen. Durch die Verzahnung ergibt sich bei der Anordnung nach Fig. 24a ein Versatz der Antennen in vertikaler Richtung und damit implizit die oben beschriebene Elevationsmessfähigkeit, in der alternativen Antennenanordnung nach Fig. 24b ist dies nicht der Fall. Statt der in den beiden Beispielen gezeigten Verzahnung von der Seite her, könnte man sich auch von oben bzw. unten her gestalten.

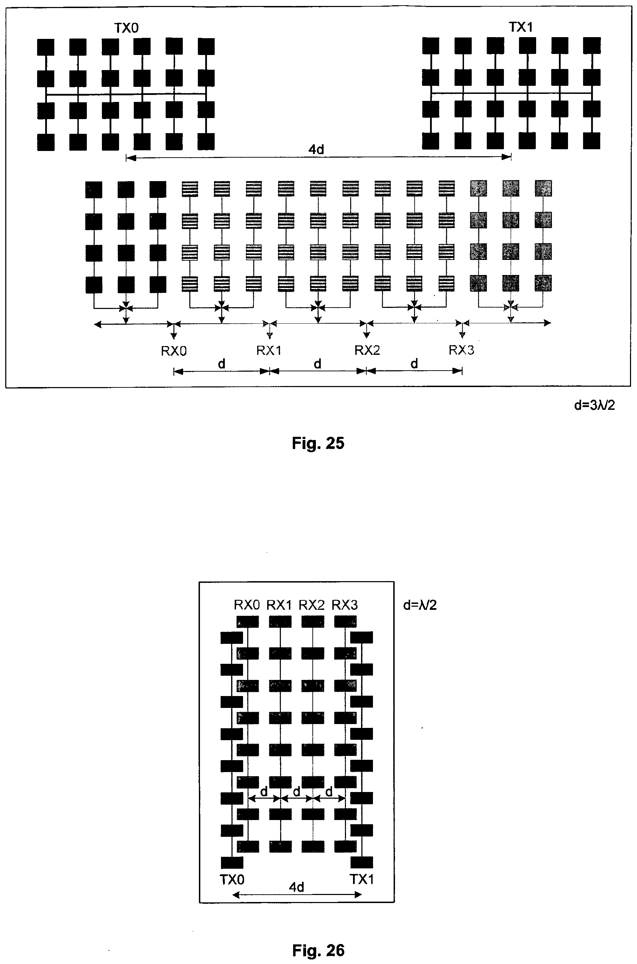

- Strahlende bzw. empfangende Elemente werden wenigstens von zwei Antennen gemeinsam benutzt (siehe als Beispiel Fig. 25, wo jeweils von zwei benachbarten Empfangsantennen drei Patchspalten gemeinsam genutzt werden und deren empfangene Leistung auf die zwei Antennen aufgeteilt wird). Theoretisch kann man dadurch Antennen fast beliebig breiter als ihren Abstand machen, praktisch werden dann aber die Verteilnetzwerke immer komplizierter, insbesondere weil Kreuzungen von Hochfrequenzverbindungen schwierig zu realisieren sind.

Ohne die oben dargestellten Ansätze zur Anordnung der Antennen ließe sich nur eine horizontale Breite der Antennen realisieren, welche ihrem Abstand entspricht, wodurch es zu stark ausgeprägten Mehrdeutigkeiten für den Azimutwinkel kommen würde.

Es sei noch erwähnt, dass die obigen Antennenanordnungen für Fernbereichssensoren immer zwei Sendeantennen außen aufweisen und sich dadurch die effektive Apertur des Sensors gegenüber seiner Breite fast verdoppeln lässt - dadurch lassen sich auch im 24GHz-Bereich Sensoren für langreichweitige Funktionen mit akzeptabler Sensorgröße realisieren. Um Empfangssignale von Objekten bis zu einer Entfernung von 200m empfangen zu können, weist die lineare Frequenzmodulation im Unterschied zur Auslegung für die Ausführungen 1 und 2 nur noch den halben Frequenzhub, also 93.75MHz auf.

Die oben beschriebenen Verfahren zur Realisierung eines Überlapps von Antennen, insbesondere in horizontaler Richtung, können auch für Nahbereichssensoren angewendet werden. Ausführung 2 nach Fig. 10 ist ein Beispiel für eine Anordnung der Sendeantennen über den Empfangsantennen (sie befinden sich also vertikal gesehen in unterschiedlichen Ebenen). In Fig. 26 ist eine horizontale Verzahnung der Sendeantennen mit den Empfangsantennen dargestellt, durch welche ein Abstand von d/2 = $\lambda$/4 zwischen den Sendeantennen und den jeweils benachbarten Empfangsantennen realisiert werden kann, wodurch trotz Anordnung der Sende- und Empfangsantennen im Wesentlichen in einer Ebene keine gemeinsame Sende- und Empfangsantenne wie in Anordnung 3 nach Fig. 12 benötigt wird.

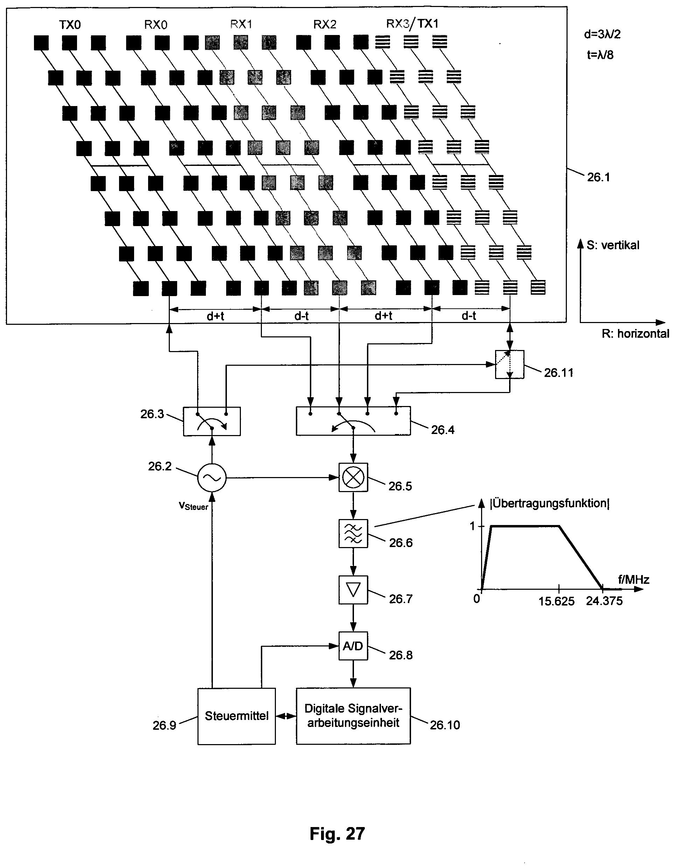

## Ausführung 11 nach Fig. 27

Die oben dargestellten Maßnahmen zur Reduzierung bzw. Vermeidung von Mehrdeutigkeiten für die Azimutwinkelmessung bei Fernbereichssensoren habe zu einem eingeschränkten azimutalen Erfassungsbereich geführt. Sollen nun aber mit einem Sensor gleichzeitig lang- und kurzreichweitige Funktionen realisiert werden, so kann ein breiter azimutaler Erfassungsbereich gefordert sein (beispielsweise -80°...+80). Dies lässt sich durch den nachfolgend dargestellten Ansatz realisieren, welcher anhand der Ausführung 11 nach Fig. 27 erläutert wird.

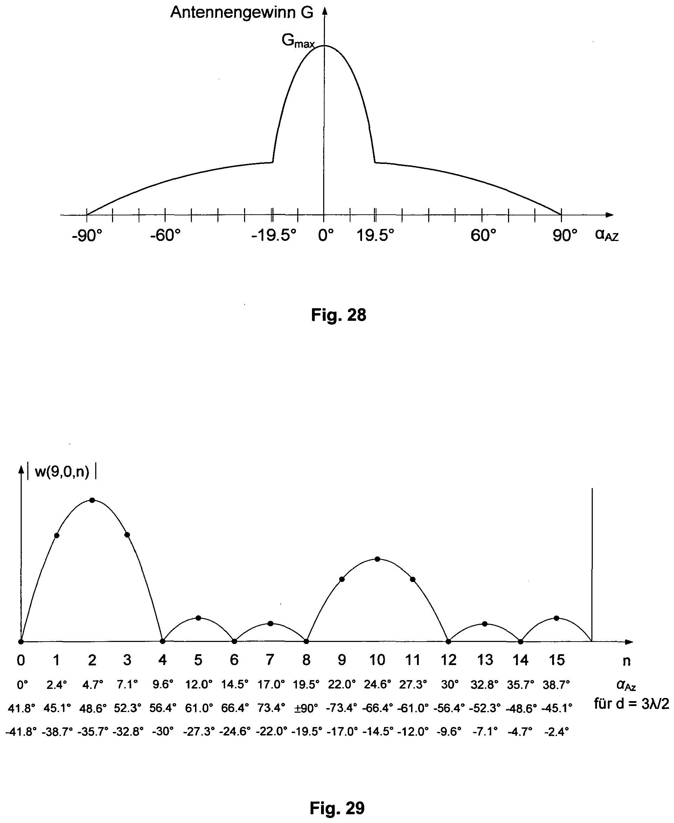

Gegenüber der Antennenkonfiguration nach Fig. 23 gibt es bei der nun betrachteten Konfiguration nach Fig. 27 zwei Unterschiede: Zum einen strahlen bzw. empfangen die Einzelantennen auch außerhalb des azimutalen Bereichs -19.5...+19.5 durch entsprechende Schultern im Antennendiagramm signifikant (siehe Fig. 28); solche Schultern können dadurch erzeugt werden, dass Patches im horizontal gesehen mittleren Bereich der Einzelantennen deutlich mehr abstrahlen als die anderen, wodurch ein schmales und ein breites Antennendiagramm überlagert werden (durch einen solchen Ansatz reduzieren sich der Antennengewinn und damit die Systemempfindlichkeit im mittleren Bereich, wo eine hohe Reichweite benötigt wird, nur relativ wenig). Und zum anderen sind die zwei Empfangsantennen RX0 und RX2 um die horizontale Distanz $t = \lambda/8$ nach rechts versetzt, welche um den Faktor 12 kleiner ist als der mittlere horizontale Versatz $d = 3\lambda/2$ der Empfangsantennen. Damit liegen die relativen Phasenzentren der 8 Antennenkombinationen in horizontaler Richtung nicht äquidistant, sondern sie weisen einen mit der Periodenlänge 2 alternierenden Versatz zu einem äquidistanten Raster auf. Für ein weit entferntes relativ zum Sensor ruhendes Objekt bei Azimutwinkel $\alpha_{Az}$ hat deshalb die Phase $\varphi(m)$ der Empfangssignale zusätzlich zu einem über die Antennenkombinationen m=0,1,...,7 linearen Anteil einen mit der Periodenlänge 2 alternierenden Anteil und ergibt sich analog zu Fig. 7b zu

$$\varphi(m) = \varphi(0) + 2\pi/\lambda \cdot \sin(\alpha_{Az}) \cdot (d \cdot m - t \cdot \mathrm{mod}(m,2)) \ .$$

Sofern es im zugehörigen Entfernung-Relativgeschwindigkeit-Tor (j,l) nur dieses eine Objekt gibt, ergeben sich die dortigen komplexen Werte v(j,l,m) nach de zweiten DFT über die 8 Antennenkombinationen m = 0,1,...,7 zu

$$v(j,l,m) = K \cdot \exp[j \cdot (\varphi(0)] \cdot \exp[j \cdot 2\pi/\lambda \cdot \sin(\alpha_{Az}) \cdot d \cdot m] \cdot \exp[-j \cdot 2\pi/\lambda \cdot \sin(\alpha_{Az}) \cdot t \cdot \mathrm{mod}(m,2)] \ ,$$

wobei K der konstante Betrag dieser Werte ist.

Damit erhält man ganz analoge Verhältnisse wie bei der oben betrachteten Elevationsmessfähigkeit durch einen mit der Periodenlänge 2 alternierenden vertikalen Versatz der einzelnen Empfangsantennen. Durch den Faktor $\exp[-j \cdot 2\pi/\lambda \cdot \sin(\alpha_{Az}) \cdot t \cdot \mathrm{mod}(m,2)]$, welcher durch den mit der Periodenlänge 2 alternierenden horizontalen Versatz der einzelnen Empfangsantennen entsteht, weist das in der dritten DFT gebildete Spektrum w(j,l,n) von v(j,l,m) zwei Leistungsspitzen auf - eine Leistungsspitze bei der zum Azimutwinkel $\alpha_{Az}$ korrespondierenden Frequenz $n_{Az}$ und eine bei der um die halbe DFT-Länge beabstandeten Frequenz $n_{Az}+N/2$, wobei für das Verhältnis der Spektralwerte dieser beiden Leistungsspitzen gilt:

$$w(j,l,n_{Az}) / w(j,l,n_{Az}+N/2) = (1+\exp[-j \cdot 2\pi/\lambda \cdot \sin(\alpha_{Az}) \cdot t]) / (1-\exp[-j \cdot 2\pi/\lambda \cdot \sin(\alpha_{Az}) \cdot t]) \ ;$$

Fig. 29 zeigt einen beispielhaften Verlauf des Betrags des Spektrums w(j,l,n) mit zwei um die Hälfte der DFT-Länge N = 16 beabstandeten Leistungsspitzen bei n = 2 und n = 10.

Für alle Azimutwinkel $\alpha_{Az}$ im Erfassungsbereich -90°...+90° ist beim hier betrachteten $t = \lambda/8$ das Verhältnis $w(j,l,n_{Az})/w(j,l,n_{Az}+N/2)$ vom Betrag her größer als eins. Damit lässt sich der zum Azimutwinkel $\alpha_{Az}$ gehörige Frequenzwert n = $n_{Az}$ als die Position der vom Betrag her größeren Leistungsspitze bestimmen; im Beispiel nach Fig. 29 ergibt sich also $n_{Az}$ = 2. Allerdings liegt damit der Azimutwinkel $\alpha_{Az}$ noch nicht eindeutig fest, da zu jedem n = $n_{Az}$ drei unterschiedliche Werte von $\alpha_{Az}$ korrespondieren, im Beispiel nach Fig. 29 kommen also noch die drei Azimutwinkel $\alpha_{Az}$ = 4.7°, 48.6° und -35.7° in Frage. Durch Umformung der obigen Beziehung (analog zur obigen Herleitung für die Elevationsmessfähigkeit) kann man nun aber den Azimutwinkel auch aus dem Verhältnis $w(j,l,n_{Az})/w(j,l,n_{Az}+N/2)$ bestimmen:

$$\alpha_{Az} = \arcsin(-\lambda/(\pi \cdot t) \cdot \arctan[j \cdot w(j,l,n_{Az}+N/2) / w(j,l,n_{Az})]) \ .$$

Da diese Beziehung für $t = \lambda/8$ übe den ganzen azimutalen Erfassungsbereich -90°...+90° eindeutig ist (wegen $2\pi/\lambda \cdot \sin(\alpha_{Az}) \cdot t \in$ ]-$\pi/4$, $\pi/4$[), kann man damit den richtigen der drei in Frage kommenden Azimutwinkel ermitteln - die Azimutwinkelbestimmung ist also für ein einzelnes Objekt in einem Entfernung-Relativgeschwindigkeit-Tor eindeutig, wobei die Eindeutigkeit über den alternierenden horizontalen Versatz der Empfangsantennen generiert wird (ohne diesen Versatz könnte man jeweils nicht zwischen drei verschiedenen Azimutwinkeln unterscheiden).

Gibt es in einem Entfernung-Relativgeschwindigkeit-Tor Reflektionen mehrerer Objekte in unterschiedlichen Azimutwinkeln, welche zu zwei Frequenzwerten n und n+N/2 korrespondieren, so kann man diese im Allgemeinen nicht mehr trennen; durch einen dann im Allgemeinen signifikanten komplexwertigen Anteil in der Größe $j \cdot w(j,l,n_{Az}+N/2)/w(j,l,n_{Az})$ kann man nur erkennen, dass es mehrere solche Objekte gibt und bestimmte mögliche Hypothesen ableiten. Welche dieser Hypothese die richtige ist, kann man meist durch Plausibilitätsbetrachtungen erkennen; Beispiele dafür sind:

- Mit Hilfe des Trackings (also der Beobachtung von Objekten über mehrere Zyklen) lässt sich bei relativ zum Sensor bewegten Objekten im Allgemeinen erkennen, welche von mehreren möglichen Hypothese die richtige ist (z. B. findet nur temporär eine Verschmelzung auf denselben Frequenzwerten n und n+N/2 statt und meist ergibt sich nur für eine Hypothese ein sinnvoller Verlauf des Objektortes).

- Durch ein wie in Fig. 28 dargestelltes Antennendiagramm der Einzelantennen haben Objekte aus dem mittleren Bereich mit hohem Antennengewinn im Allgemeinen deutlich mehr Pegel als Objekte aus dem äußeren Bereich mit geringerem Antennengewinn (Schultern), so dass bei Anwesenheit von einem Objekt im mittleren und einem im äußeren Bereich das mittlere Objekt im Pegel dominiert und deshalb mit richtigem Azimutwinkel erkannt wird, was aus funktionaler Sicht ausreicht, da dieses mittlere Objekt dann das relevante ist.

Das bisher betrachtete Beispiel nach Fig. 27 hatte keinen vertikalen Versatz in den Empfangsantennen und damit keine Elevationsmessfähigkeit. Grundsätzlich kann man natürlich auch noch einen solchen vertikalen Versatz überlagern. Wählt man für den vertikalen und den horizontalen Versatz unterschiedliche Periodenlängen, so lassen sich ihre Auswirkungen direkt trennen, so dass Azimut- und Elevationswinkel für ein einziges Objekt in einem Entfernung-Relativgeschwindigkeit-Tor eindeutig bestimmt werden können; bei gleicher Periodenlänge sind entsprechende Plausibilitätsbetrachtungen notwendig.

Den dargestellten Ansatz zur eindeutigen Messung des Azimutwinkels bei breit abstrahlenden Fernbereichssensoren kann man auch so interpretieren, dass in die hochauflösende und genaue, aber mehrdeutige digitale Azimutstrahlformung ein Monopulsverfahren zur für ein Einzelobjekt eindeutigen, aber groben Azimutwinkelbestimmung eingelagert ist. Dieser Ansatz hat den Vorteil, dass man zum einen alle auf äquidistanten Empfangsantennen beruhenden Auswerteverfahren (wie z. B. die einfache digitale Strahlformung mit einer DFT) beibehalten kann und dass man zum anderen für den Azimutwinkel keine Einbußen für die Genauigkeit und nur geringe Einbußen für die Trennfähigkeit hat (letzteres nur bei Objekten, die Leistungsspitzen bei gleichen Frequenzwerten n generieren). Um aus der größeren der beiden Leistungsspitze den Azimutwinkel möglichst genau zu bestimmen, kann man - wie vorne schon erwähnt - eine Interpolation mit benachbarten Leistungswerten durchführen und daraus das interpolierte Maximum ermitteln.

Es sei bemerkt, dass man den periodischen horizontalen Versatz der Antennenkombinationen grundsätzlich auch mit einer höheren Periodelänge Q als 2 ausgestalten kann. Durch ein Objekt ergebenen sich im Spektrum dann im Allgemeinen Q Leistungsspitzen mit jeweiligem Abstand N/Q, wobei N die DFT-Länge der digitalen Strahlformung ist; aus den Werten dieser Leistungsspitzen kann man wieder den Azimutwinkel eindeutig bestimmen, wobei nun sogar eine Trennfähigkeit von Objekten, die Leistungsspitzen bei gleichen Frequenzwerten n generieren, möglich wird. Durch einen solchen Ansatz werden zwei digitale Strahlformungen in einer DFT überlagert - die eine ist fein, aber mehrdeutig, die andere für Einzelobjekte eindeutig, aber grob.

Zu betonen ist, dass der hier vorgestellte Ansatz für einen Sensor zur Realisierung von lang- und kurzreichweitigen Funktionen im Wesentlichen kostenneutral ist.

**Abschließende Bemerkung**

Es sei bemerkt, dass sich die anhand der obigen Beispiele dargestellten erfindungsgemäßen Überlegungen und Ausführungen auf allgemeine Bemessungen und Parameterauslegungen übertragen lassen, d. h., sie können auch auf andere Zahlenwerte (z. B. für den horizontalen und vertikalen Abstand der Antennen) angewendet werden. Deshalb sind in Formeln und Bilder neben konkreten Zahlenwerten oft auch allgemeine Parameter angegeben.

**Patentansprüche**

1. Radarsystem zur Umfelderfassung eines Kraftfahrzeugs mit

- Sendemitteln zur Abstrahlung von Sendesignalen mit zwei oder mehreren Sendeantennen,
- Empfangsmitteln zum Empfang von an Objekte reflektierten Sendesignalen mit einer oder mehreren Empfangsantennen und
- Signalverarbeitungsmitteln zur Prozessierung der empfangenen Signale, wobei
- es Sende- und Empfangsantennen gibt, welche in planarer Technologie realisiert und auf einer ebenen Fläche angeordnet sind,
- diese Sende- und Empfangsantennen jeweils zumindest näherungsweise dieselbe Strahlcharakteristik haben, wobei die Strahlcharakteristik dieser Sendeantennen unterschiedlich zur Strahlcharakteristik dieser Empfangsantennen sein kann,
- Empfangssignale aus unterschiedlichen Kombinationen dieser Sende- und Empfangsantennen akquiriert werden,

- in den Signalverarbeitungsmitteln aus diesen Empfangssignalen für Objekte deren Winkellage in einer Raumrichtung R geschätzt wird, wobei ausgenutzt wird, dass die Empfangssignale eines einzelnen Objekts unterschiedliche Phasenlagen zueinander abhängig von der Winkellage dieses Objektes in der Raumrichtung R haben, und
- sich zumindest zwei dieser Sende- und Empfangsantennen bezüglich der Raumrichtung R überlappen ohne identisch zu sein,

**dadurch gekennzeichnet, dass** dieser Überlapp durch wenigstens eine der nachfolgenden Anordnungen bzw. Ausgestaltungen dieser Sende- und Empfangsantennen realisiert wird:

a) Antennen sind bezüglich der zu einer horizontalen Raumrichtung R senkrechten Raumrichtung S zueinander versetzt, und die Sendeantennen sind über den Empfangsantennen angeordnet.
b) Die Sende- und bzw. oder die Empfangsantennen haben bezüglich der Raumrichtung R eine schräge Form.
c) Antennen sind bezüglich der Raumrichtung R ineinander verzahnt.
d) zumindest zwei Antennen aus einer Mehrzahl von Elementen bestehen und strahlende bzw. empfangende Elemente werden von wenigstens zwei Sende- bzw. Empfangsantennen gemeinsam benutzt.

2. Radarsystem nach Anspruch 1, bei welchem der Überlapp von zumindest zwei der Sende- und Empfangsantennen bezüglich der Raumrichtung R dadurch entsteht, dass zur Vermeidung oder Reduzierung von Mehrdeutigkeitseffekten bei der Winkelschätzung bezüglich der Raumrichtung R entsprechend breite Antennen für eine entsprechend schmale Strahlcharakteristik benötigt werden.

3. Radarsystem nach einem der obigen Ansprüche, bei welchem Sende- und Empfangsantennen eine bezüglich der Raumrichtung R schräge Form haben, wobei die Sendeantennen entgegen den Empfangsantennen gekippt sind.

4. Radarsystem nach einem der obigen Ansprüche, bei welchem mehrere Sendeantennen, Anzahl $N_S$, und mehrere Empfangsantennen, Anzahl $N_E$, welche bezüglich der Raumrichtung R nicht außerhalb der äußeren dieser $N_S$ Sendeantennen liegen, jeweils zumindest näherungsweise dieselbe Strahlcharakteristik besitzen und bezüglich ihren Phasenzentren in dieser Raumrichtung R jeweils zumindest näherungsweise äquidistant angeordnet sind, wobei in dieser Raumrichtung R der Abstand dieser $N_S$ Sendeantennen zueinander um den Faktor $N_E$ oder $N_E$-1 größer ist als der Abstand dieser $N_E$ Empfangsantennen zueinander, wodurch eine Anordnung mit einer Sendeantenne und maximal $N_S \cdot N_E$ in dieser Raumrichtung R äquidistant angeordneten Empfangsantennen mit zumindest näherungsweise identischer Abstrahlcharakteristik synthetisiert wird.

5. Radarsystem nach Anspruch 4, bei welchem bezüglich der Raumrichtung R die Breite der $N_S$ Sendeantennen und bzw. oder die Breite der $N_E$ Empfangsantennen größer ist als der Abstand der $N_E$ Empfangsantennen zueinander.

6. Radarsystem nach Anspruch 4 oder 5, bei welchem

- Empfangssignale aus unterschiedlichen Kombinationen der $N_S$ Sende- und der $N_E$ Empfangsantennen akquiriert werden, wobei für jede Kombination ein relatives Phasenzentrum als Summe der beiden Vektoren von einem Referenzpunkt zu den Phasenzentren der jeweiligen Sende- und der jeweiligen Empfangsantenne definiert ist und die relativen Phasenzentren dieser Kombinationen von Sende- und Empfangsantennen bezüglich der Raumrichtung R zumindest näherungsweise äquidistant liegen,
- bezüglich der zur Raumrichtung R senkrechten Raumrichtung S die Position der relativen Phasenzentren dieser Kombinationen aus Sende- und Empfangsantennen periodisch mit der Periodenlänge P variiert, wenn eine Reihenfolge dieser Kombinationen aus Sende- und Empfangsantennen betrachtet wird, welche in der Raumrichtung R bezüglich der Position der relativen Phasenzentren geordnet ist, und
- in den Signalverarbeitungsmitteln ausgenutzt wird, dass die Empfangssignale eines Objekts abhängig von dessen Winkellage in der Raumrichtung S einen über die so geordneten Kombinationen von Sende- und Empfangsantennen periodisch mit der Periodenlänge P alternierenden Phasenanteil haben, wodurch insbesondere für diese Raumrichtung S Aussagen zur Winkellage von Objekten und bzw. oder zur Fehlausrichtung des Radarsystems möglich sind.

7. Radarsystem nach Anspruch 6, bei welchem die Raumrichtung R horizontal und die Raumrichtung S vertikal liegt und in den Signalverarbeitungsmitteln zur Erkennung von unter- und bzw. oder überfahrbaren insbesondere stationären Objekten ein Maß verwendet wird, welches wenigstens eine Abweichung gegenüber den sich bei Empfangssignalen aus nur einem Elevationswinkel ergebenden Verhältnissen ausnutzt, wobei in Zusammenhang mit der spiegelnden Eigenschaft von Straßenoberflächen die Größe und bzw. oder der Betrag, insbesondere jeweils gefiltert über die Objektentfernung, und bzw. oder die entfernungsbezogene Variation dieses Maßes für eine zumindest grobe Schätzung der Höhe von Objekten über der Straßenoberfläche benutzt wird.

**8.** Radarsystem nach einem der Ansprüche 1-3, bei welchem

- Empfangssignale aus unterschiedlichen Kombinationen von Sende- und Empfangsantennen akquiriert werden, wobei für jede Kombination ein relatives Phasenzentrum als Summe der beiden Vektoren von einem Referenzpunkt zu den Phasenzentren der jeweiligen Sende- und der jeweiligen Empfangsantenne definiert ist,
- die dabei benutzten Sende- und Empfangsantennen jeweils zumindest näherungsweise dieselbe Strahlcharakteristik haben, wobei die Strahlcharakteristik dieser Sendeantennen unterschiedlich zur Strahlcharakteristik dieser Empfangsantennen sein kann,
- bezüglich der Raumrichtung R die Position der relativen Phasenzentren dieser Kombinationen aus Sende- und Empfangsantennen periodisch mit der Periodenlänge Q um ein äquidistantes Raster variiert, und
- in den Signalverarbeitungsmitteln zur Bestimmung der Lage von Objekten in der Raumrichtung R ausgenutzt wird, dass die Empfangssignale eines Objekts abhängig von dessen Winkellage in der Raumrichtung R neben einem linearen Phasenanteil einen mit der Periodenlänge Q alternierenden Phasenanteil haben, wenn eine in der Raumrichtung R bezüglich der Position der relativen Phasenzentren geordnete Reihenfolge der Kombinationen aus Sende- und Empfangsantennen betrachtet wird.

## Claims

**1.** A radar system for recording the environment of a motor vehicle, comprising

- transmission means for emitting transmission signals using two or more transmitter antennae,
- receiving means for receiving transmission signals reflected by objects using one or more receiver antennae, and
- signal processing means for processing the received signals, wherein
- the system is equipped with transmitter and receiver antennae that are planar and are arranged on a level surface,
- said transmitter and receiver antennae each have at least approximately the same emission characteristics, wherein the emission characteristics of said transmitter antennae can be different from the emission characteristics of said receiver antennae,
- received signals are acquired from different combinations of said transmitter and receiver antennae,
- in the signal processing means, the angular position in a spatial direction R is estimated for objects from said received signals, using the fact that the received signals from an individual object have different phase positions in relation to one another depending on the angular position of said object in the spatial direction R, and
- at least two of said transmitter and receiver antennae overlap with regard to the spatial direction R without being identical,

**characterized in that**
said overlap is obtained by at least one of the following arrangements or configurations of said transmitter and receiver antennae:

a) the antennae are offset in relation to one another with regard to the spatial direction S that runs perpendicular to a horizontal spatial direction R, and the transmitter antennae are arranged above the receiver antennae,
b) the transmitter and/or the receiver antenna(e) has or have an oblique form with regard to the spatial direction R,
c) the antennae are interleaved with regard to the spatial direction R,
d) at least two antennae consist of a multiplicity of elements and the use of emitting or receiving elements is common to at least two transmitter or receiver antennae.

**2.** The radar system according to Claim 1, in which the overlap of at least two of the transmitter and receiver antennae with regard to the spatial direction R is created as a result of the fact that, in order to avoid or reduce ambiguity effects during the estimation of the angle with regard to the spatial direction R, correspondingly wide antennae are required for correspondingly narrow emission characteristics.

3. The radar system according to any one of the above claims, in which transmitter and receiver antennae have an oblique form with regard to the spatial direction R, wherein the transmitter antennae are inclined towards the receiver antennae.

4. The radar system according to any one of the above claims, in which multiple transmitter antennae, number $N_S$, and multiple receiver antennae, number $N_E$, which are not situated outside the outer of these $N_s$ transmitter antennae with regard to the spatial direction R, each have at least approximately the same emission characteristics and are each arranged at least approximately equidistant with regard to their phase centers in said spatial direction R, wherein in said spatial direction R the distance of said $N_S$ transmitter antennae in relation to one another is greater by the factor $N_E$ or $N_E$-1 than the distance of said $N_E$ receiver antennae in relation to one another, as a result of which an arrangement with a transmitter antenna and a maximum of $N_S$-$N_E$ receiver antennae arranged equidistant in said spatial direction R are synthesized with at least approximately identical emission characteristics.

5. The radar system according to Claim 4, in which the width of the $N_S$ transmitter antennae and/or the width of the $N_E$ receiver antennae with regard to the spatial direction R is greater than the distance of the $N_E$ receiver antennae in relation to one another.

6. The radar system according to Claim 4 or 5, in which

   - received signals from different combinations of the Ns transmitter and the $N_E$ receiver antennae are acquired, wherein a relative phase center is defined for each combination as the sum of the two vectors from a reference point to the phase centers of the respective transmitter antenna and the respective receiving antenna, and the relative phase centers of said combinations of transmitter and receiver antennae are at least approximately equidistant with regard to the spatial direction R;
   - with regard to the spatial direction S perpendicular to the spatial direction R, the position of the relative phase centers of said combinations of transmitter and receiving antennae varies periodically with the period length P, if a sequence of said combinations of transmitter and receiver antennae is observed, which sequence is ordered in the spatial direction R with regard to the position of the relative phase centers, and
   - in the signal processing means, use is made of the fact that the received signals from an object have a phase component over the thus ordered combinations of transmitter and receiver antennae which alters periodically with the period length P, depending on the angular position of said object in the spatial direction S, as a result of which statements can be made regarding the angular position of objects and/or regarding the misalignment of the radar system, in particular for said spatial direction S.

7. The radar system according to Claim 6, in which the spatial direction R is horizontal and the spatial direction S is vertical and a measure is used in the signal processing means for identifying, in particular, stationary objects which can be driven under and/or over, which measure uses at least one deviation with respect to the conditions arising in the case of received signals from only one elevation angle, wherein in connection with the reflective property of road surfaces, the size and/or the amount, in particular filtered in each case over the object distance, and/or the distance-related variation of said measure is used for an at least coarse estimate of the height of objects above the road surface.

8. The radar system according to any one of Claims 1-3, in which

   - received signals from different combinations of transmitter and receiver antennae are acquired, wherein a relative phase center is defined for each combination as the sum of the two vectors from a reference point to the phase centers of the respective transmitter antenna and the respective receiving antenna,
   - the transmitter and receiver antennae used in the process each have at least approximately the same emission characteristics, wherein the emission characteristics of said transmitter antennae can be different from the emission characteristics of said receiver antennae,
   - with regard to the spatial direction R, the position of the relative phase centers of said combinations of transmitter and receiver antennae is periodically varied with the period length Q by an equidistant grid, and
   - use is made of the fact in the signal processing means, in order to determine the position of objects in the spatial direction R, that the received signals of an object have, in addition to a linear phase component, a phase component which alternates with the period length Q, depending on the angular position of said object in the spatial direction R, if an ordered sequence of the combinations of transmitter and receiver antennae with regard to the position of the relative phase centers is observed in the spatial direction R.

**Revendications**

1. Système radar pour la détection de l'environnement d'un véhicule, avec

   - des moyens d'émission pour la diffusion de signaux d'émission avec deux ou plusieurs antennes d'émission,
   - des moyens de réception pour la réception de signaux d'émission réfléchis sur des objets avec une ou plusieurs antennes de réception, et
   - des moyens de traitement du signal pour le traitement des signaux reçus,
   - des antennes d'émission et de réception existant, lesquelles sont réalisées par technologie planaire et agencées sur une surface plane,
   - ces antennes d'émission et de réception ayant respectivement au moins de façon approximative la même caractéristique de diffusion, la caractéristique de diffusion de ces antennes d'émission pouvant être différente de la caractéristique de diffusion de ces antennes de réception,
   - des signaux de réception pouvant être obtenus à partir de différentes combinaisons de ces antennes d'émission et de réception,
   - la position angulaire d'objets dans une direction spatiale R étant estimée dans les moyens de traitement du signal à partir des signaux de réception pour ces objets, le fait que les signaux de réception d'un objet individuel aient des positions de phase différentes l'un par rapport à l'autre en fonction de la position angulaire de cet objet dans la direction spatiale R étant exploité, et
   - au moins deux antennes d'émission et de réception se chevauchant relativement à la direction spatiale R sans être identiques,

   **caractérisé en ce que**
   ce chevauchement est réalisé par au moins un des agencements ou des configurations suivants de ces antennes d'émission et de réception :

   a) les antennes sont décalées l'une par rapport à l'autre relativement à une direction spatiale S verticale par rapport à une direction spatiale R horizontale, et les antennes d'émission sont disposées au-dessus des antennes de réception.
   b) les antennes d'émission et/ou les antennes de réception ont une forme oblique relativement à la direction spatiale R.
   c) les antennes sont imbriquées les unes dans les autres relativement à la direction spatiale R.
   d) au moins deux antennes se composent d'une pluralité d'éléments et des éléments émettant ou réceptionnant sont utilisés conjointement par au moins deux antennes d'émission ou de réception.

2. Système radar selon la revendication 1, sur lequel le chevauchement d'au moins deux antennes d'émission et de réception relativement à la direction spatiale R résulte du fait que des antennes corrélativement larges sont requises pour une caractéristique de diffusion corrélativement étroite, pour éviter ou réduire des effets d'ambiguïté lors de l'estimation angulaire, relativement à la direction spatiale R.

3. Système radar selon l'une des revendications précédentes, sur lequel des antennes d'émission et de réception ont une forme oblique relativement à la direction spatiale R, les antennes d'émission étant basculées vers les antennes de réception.

4. Système radar selon l'une des revendications précédentes, sur lequel plusieurs antennes d'émission, de nombre $N_S$, et plusieurs antennes de réception, de nombre $N_E$, lesquelles ne se trouvent pas hors des antennes externes de ces antennes d'émission Ns, relativement à la direction spatiale R, possèdent respectivement au moins de façon approximative la même caractéristique de diffusion et sont respectivement agencées de façon équidistante au moins de façon approximative relativement à leurs centres de phase dans cette direction spatiale R, la distance de ces antennes d'émission $N_S$ l'une par rapport à l'autre dans cette direction spatiale R étant supérieure du facteur $N_E$ ou $N_E$-1 à la distance de ces antennes de réception $N_E$ l'une par rapport à l'autre, un agencement avec une antenne d'émission et au maximum $N_S$-$N_E$ antennes de réception agencées de façon équidistante dans cette direction spatiale R avec caractéristique de diffusion au moins approximativement identique étant ainsi synthétisé.

5. Système radar selon la revendication 4, sur lequel la largeur des antennes d'émission Ns et/ou la largeur des antennes de réception $N_E$ est supérieure à la distance des antennes de réception $N_E$ l'une par rapport à l'autre, relativement à la direction spatiale R.

**6.** Système radar selon la revendication 4 ou 5, sur lequel

- des signaux de réception sont obtenus à partir de combinaisons différentes des antennes d'émission Ns et des antennes de réception $N_E$, un centre de phase relatif étant défini comme somme des deux vecteurs d'un point de référence aux centres de phase des antennes d'émission respectives et des antennes de réception respectives pour chaque combinaison, et les centres de phase relatifs de ces combinaisons d'antennes d'émission et de réception étant équidistants au moins de façon approximative relativement à la direction spatiale R.
- la position des centres de phase relatifs de ces combinaisons d'antennes d'émission et de réception varie périodiquement avec la longueur de période P relativement à la direction spatiale S verticale par rapport à la direction spatiale R, lorsqu'une séquence de ces combinaisons d'antennes d'émission et de réception qui est ordonnée dans la direction spatiale R relativement à la position des centres de phase relatifs est observée, et
- le fait que les signaux de réception d'un objet, en fonction de sa position angulaire dans la direction spatiale S, aient une composante de phase alternant périodiquement avec la longueur de période P, par le biais des combinaisons d'antennes d'émission et de réception ordonnées de la sorte, est exploité dans les moyens de traitement du signal, des déclarations sur la position angulaire d'objets et/ou sur le défaut d'orientation du système radar étant notamment possibles pour cette direction spatiale S de ce fait.

**7.** Système radar selon la revendication 6, sur lequel la direction spatiale R est horizontale et la direction spatiale S est verticale, et une mesure est utilisée dans les moyens de traitement du signal pour la détection d'objets, notamment stationnaires, au-dessus et/ou au-dessous desquels il est possible de passer, laquelle mesure utilise au moins un écart relativement aux rapports résultant d'un seul angle d'élévation lors de signaux de réception, la grandeur et/ou la valeur, en particulier filtrées respectivement par le biais de la distance de l'objet, et/ou la variation relative à la distance de cette mesure étant utilisées pour une estimation au moins grossière de la hauteur des objets au-dessus de la surface de la route, en corrélation avec la propriété réfléchissante de surfaces de route.

**8.** Système radar selon l'une des revendications 1-3, sur lequel

- des signaux de réception sont obtenus à partir de combinaisons différentes d'antennes d'émission et de réception, un centre de phase relatif étant défini comme somme des deux vecteurs d'un point de référence aux centres de phase des antennes d'émission respectives et des antennes de réception respectives pour chaque combinaison,
- les antennes d'émission et de réception utilisées ici ont respectivement au moins de façon approximative la même caractéristique de diffusion, la caractéristique de diffusion de ces antennes d'émission pouvant être différente de la caractéristique de diffusion de ces antennes de réception,
- la position des centres de phase relatifs de ces combinaisons d'antennes d'émission et de réception varie périodiquement avec la longueur de période Q d'une grille équidistante relativement à la direction spatiale R, et
- le fait que les signaux de réception d'un objet, en fonction de sa position angulaire dans la direction spatiale R, aient, outre une composante de phase linéaire, une composante de phase alternant avec la longueur de période Q est exploité dans les moyens de traitement du signal pour la détermination de la position d'objets dans la direction spatiale R, lorsque une séquence des combinaisons d'antennes d'émission et de réception ordonnée dans la direction spatiale R relativement à la position des centres de phase relatifs est observée.

**Fig. 1**

**Fig. 2**

**Fig. 3**

**Fig. 4**

Fig. 5

**Fig. 6**

d=λ/2

RX0 RX1 RX2 RX3 RX4 RX5 RX6 RX7

**Fig. 7a**

Objekt

$r_{RP}$

$\sin(-\alpha_{Az})(a+2.5d)$

$\sin(-\alpha_{Az})(a+4.5d)$

$\sin(-\alpha_{Az})(a+7.5d)$

$\alpha_{Az}<0$

$\alpha_{Az}$

a  d/2  d  d  d  d  d  d  d

RP  TX0 RX0  RX1  RX2  RX3  RX4  RX5  RX6  RX7

d = λ/2

**Fig. 7b**

EP 2 294 450 B1

Fig. 8a

| | 0 | 1 | 2 | 3 | 4 | 5 | 6 | 7 | 8 | 9 | 10 | 11 | 12 | 13 | 14 | 15 | n |
|---|---|---|---|---|---|---|---|---|---|---|---|---|---|---|---|---|---|
| | 0° | 7.2° | 14.5° | 22° | 30° | 38.7° | 48.6° | 61° | ±90° | -61° | -48.6° | -38.7° | -30° | -22° | -14.5° | -7.2° | αAz |

für d = λ/2

Fig. 8b

30

Fig. 9

**Fig. 10**

**Fig. 11**

Fig. 12

**Fig. 13**

Fig. 14

**Fig. 15a**

**Fig. 15b**

Fig. 16

**Fig. 17**

**Fig. 18a**

**Fig. 18b**

**Fig. 19**

Fig. 20a

Fig. 20b

d=3λ/2

**Fig. 21**

d=3λ/2

**Fig. 22**

d=3λ/2

**Fig. 23**

TX0

TX1

4d

RX0                     RX2

RX1          d          RX3

d          d          d

d=3λ/2

Fig. 24a

TX0

TX1

4d

RX0                     RX2

RX1          d          RX3

d          d          d

d=3λ/2

Fig. 24b

TX0    TX1

4d

RX0    RX1    RX2    RX3

d    d    d

d=3λ/2

**Fig. 25**

RX0 RX1 RX2 RX3    d=λ/2

d  d  d

TX0    TX1

4d

**Fig. 26**

**Fig. 27**

EP 2 294 450 B1

Antennengewinn G

G_max

-90°   -60°   -19.5°  0°  19.5°     60°     90°  α_AZ

**Fig. 28**

| w(9,0,n) |

| 0 | 1 | 2 | 3 | 4 | 5 | 6 | 7 | 8 | 9 | 10 | 11 | 12 | 13 | 14 | 15 |  n

0°  2.4°  4.7°  7.1°  9.6°  12.0°  14.5°  17.0°  19.5°  22.0°  24.6°  27.3°  30°  32.8°  35.7°  38.7°     α_Az

41.8°  45.1°  48.6°  52.3°  56.4°  61.0°  66.4°  73.4°  ±90°  -73.4°  -66.4°  -61.0°  -56.4°  -52.3°  -48.6°  -45.1°     für d = 3λ/2

-41.8°  -38.7°  -35.7°  -32.8°  -30°  -27.3°  -24.6°  -22.0°  -19.5°  -17.0°  -14.5°  -12.0°  -9.6°  -7.1°  -4.7°  -2.4°

**Fig. 29**

48

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006066474 A

- EP 0947852 A1

**In der Beschreibung aufgeführte Nicht-Patentliteratur**

- Calculation of Coupling Coefficients for Arrays with skewed Lattices from Ininite Array Scan Reflection Data. **DANIEL T. MCGRATH.** IEEE Transactions on Antennas and Propagation. IEEE Service Center, 01. Juli 2007, vol. 55, 2116-2119